(19) Europäisches Patentamt
European Patent Office
Office européen des brevets

(11) **EP 2 899 120 A1**

(12) **EUROPÄISCHE PATENTANMELDUNG**
veröffentlicht nach Art. 153 Abs. 4 EPÜ

(43) Veröffentlichungstag:
**29.07.2015   Patentblatt 2015/31**

(51) Int Cl.:
***B64C 25/40*** (2006.01)   ***B64C 25/42*** (2006.01)

(21) Anmeldenummer: **12885062.5**

(22) Anmeldetag: **24.09.2012**

(86) Internationale Anmeldenummer:
**PCT/RU2012/000778**

(87) Internationale Veröffentlichungsnummer:
**WO 2014/046564 (27.03.2014 Gazette 2014/13)**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(71) Anmelder: **Ivandaev, Sergey Ivanovich
Moscow 107392 (RU)**

(72) Erfinder: **Ivandaev, Sergey Ivanovich
Moscow 107392 (RU)**

(74) Vertreter: **Jeck, Anton
Klingengasse 2
71665 Vaihingen/Enz (DE)**

(54) **VERFAHREN ZUR ANSTEUERUNG DER FAHRWERKRÄDER EINES FLUGZEUGS UND FAHRWERKVORRICHTUNG**

(57)      Gemäß dem erfindungsgemäßen Verfahren ist jedes Rad des Fahrwerks mit Hilfe einer darauf aufgebauten radialen oder axialen Luftturbine in entgegengesetzten Drehrichtungen drehbar. Die Luftturbinen sind mit Druckluft von Hauptmotoren oder von einer Hilfsenergieanlage des Flugzeugs versorgt. Die Räder sind vor dem Aufsetzen oder bei der Vorwärts-Bodenbewegung mittels einer der Turbinen beschleunigt, während andere Turbinen für das Bremsen nach der Landsetzung sowie für den Rückwärtslauf und für die Wendemanöver benutzt sind. Die Luft ist auch benutzt, um die Radbremse zu spülen und zu kühlen. Die nicht kommunizierenden Luftsammler der Turbinen sind an Druckluftquellen an Bord mittels einer teleskopierbaren an einer Fahrwerkstrebe befestigten Rohrleitung mit Steuerventilen angeschlossen. Die Scheiben-Statoren der Bremse haben Durchgangskanalsektoren und wirken als Düsendeckel, und die Scheiben-Rotoren haben am Kreisumfang gleichmäßig verteilte Durchgangskanäle und wirken als Laufräder der axialen Turbine. Die Düsenringe der Radialturbine sind auf dem Stator und ein Laufrad ist an einer Innenfelge des Rads des Fahrwerks aufgebaut. Die Düsenringe sind mittels Segment-Luftleitungen an jeweilige Luftsammler angeschlossen.

Fig. 7

**Beschreibung**

Die Erfindung betrifft eine Antriebsart für Flugzeugräder und ein Flugzeugfahrwerk nach dem Oberbegriff des Anspruchs 1.

Die Erfindung ist in der Flugtechnik einsetzbar und ist für Antriebsarten für Flugzeugräder verwendbar, um die Umfangsgeschwindigkeit jedes Flugzeugrads mit der Flugzeuggeschwindigkeit vor der Landung und während der Bodenbewegung abzugleichen.

Durch die RU 2152334, Kozminykh, ist ein Verfahren zur Vorbeschleunigung von Flugzeugrädern bekannt. Es umfasst die Verwendung von taschenförmigen Flügeln aus einem elastischen Material mit veränderlicher Geometrie an der Seitenfläche des Radreifens. Dabei werden die Flügel beim Start angepresst und im zusammengeklappten Zustand aufrechterhalten und während der Landung freigemacht, zum Beispiel mittels Magneten und Federn, um die Räder nach dem Fahrwerkausfahren anlaufen zu lassen.

Das Verfahren hat die Nachteile, dass es sehr schwer ist, die Leistung der Räderbeschleunigung auf eine benötigte Drehgeschwindigkeit zu verändern und zu kontrollieren. Bei Wagenfahrwerken schirmen die Turbinen der Bugräder des Fahr-werks die ihnen nachlaufenden Räder gegen den Luftstrom ab. Infolge einer solchen Abschirmung nimmt die Möglichkeit der gleicherweise effizienten Beschleunigung aller Räder des Fahrwerks ab. Darüber hinaus setzt dieses Verfahren voraus, dass die taschenförmigen Flügel während der Reifenfertigung entweder während der Reifenformung oder mittels einer Anbindung mit Vulkanisation sowie Verklebung, d. h. mittels Veränderung des eigentlichen Reifenfertigungsablaufs, gefertigt und befestigt werden.

Durch die RU 2384467, Belyaev, ist ein Verfahren zur Vorbeschleunigung der Flugzeugräder bekannt, wonach Luft von Lufteinläufen (Diffusoren) oder von einem Hochdruckspeicher den an den Laufradkästen montierten Turbinen zugeführt wird. Bei dem Hochdruckspeicher handelt es sich insbesondere um eine Gasflasche, die mittels Rohrleitungen mit den Düsenelementen verbunden ist, welche an die Turbinen herangeführt sind.

Der Mangel des Verfahrens ist eine Sperrigkeit der Konstruktion der Lufteintrittsvorrichtungen. Sie bedarf Sondermaßnahmen, um die Lufteintrittsvorrichtungen zusammen mit dem Fahrwerk nach dem Start einzufahren. Während des Starts erzeugen solche Lufteinläufe einen beachtlichen Luftwiderstand gegen die Bewegung, der das Flugzeug durch Räderantrieb abbremst und nicht beschleunigt. Die Gasflaschenanlage ist zu groß und schwer und setzt voraus, dass die Gasflaschen vor dem Flug mit Hochdruckluft (Hochdruckgas) gefüllt werden. Das erschwert die Flugzeugwartung.

Aus der RU 2403180, Steven Sallivan, ist ein Brems- und Manövrierungsverfahren bekannt, wonach ein Motor/Generator einer Radtrommel als ein Motor vor der Landsetzung benutzt wird, um die Umfangsgeschwindigkeit der Reifen der relativen Grundgeschwindigkeit so anzupassen, dass zum Zeitpunkt der Landsetzung eine Mindestdifferenz zwischen diesen beiden Geschwindigkeiten vorliegt. Der Flugzeugräderantrieb wird auch während der Bodenbewegung und während des Abflugs benutzt. Bei dem Motor/Generator der Radtrommel handelt es sich um einen elektrischen Scheibenmotor, dessen Scheiben zugleich Scheiben einer Reibungs-bremse sind.

Der Mangel des Verfahrens ist eine Erschwerung des Fahrwerks durch Motoren und des Flugzeugs selbst wegen spezieller leistungsstarker Bordakkus im Falle der aufgespeicherten zurückgewonnenen Bremsenergie. Die Erzeugung von effektiven elektromagnetischen Kräftemomenten, die für die Flugzeugbewegung während der Manövrierung ausreichen, in einem kleinen Umfang der Radnabe ist technisch schwierig und erschwert wesentlich die Fertigung, den Betrieb und die Instandsetzung des Radantriebs.

Es ist Aufgabe der Erfindung, die Flugzeugräder auf eine benötigte Drehgeschwindigkeit zu beschleunigen (anzutreiben), welche den Radschlupf aller Räder auf der Piste beim Landen ausschließt und eine Stoßfreiheit während des Kontakts und einen minimalen Reifenverschleiß sowie ein autonomes Rollen des Flugzeugs auf dem Boden durch den Räderantrieb sicherstellt. Eine zusätzliche Aufgabe ist, der Bildung eines sogenannten Gummiabriebs auf den Pisten der Flugplätze vorzubeugen. Beim Gummiabrieb handelt es sich um strichartige Spuren des verbrannten Reifengummis der Fahrwerke von landenden Flugzeugen. Nach dem Stoß bleibt eine schwarze Strichspur auf der Piste. Nach dem ersten Stoß kann die Länge der schwarzen Spur 500 m erreichen. Der Gummiabrieb ist gefährlich, denn diese Schicht des verbrannten und auf der Bahn zurückgelassenen Gummis baut den Haftreibungsbeiwert von Reifen und Beton um das 2-fache und noch mehr ab, so dass die Länge des Ausrollens zunimmt.

Der technische Effekt der Erfindung ist die Möglichkeit, die Umfangsgeschwindigkeit jedes Reifens und die Flugzeuggeschwindigkeit während der Landung abzugleichen und die Drehgeschwindigkeit jedes Flugzeugrads im Fahrwerk genau zu steuern. Weitere technische Effekte der Erfindung sind eine Vermeidung des Gummiabriebs auf der Piste und eine Verminderung der Griffigkeit zwischen dem Flugzeugreifen und der Landebahn. Der weitere technische Effekt ist die Möglichkeit einer autonomen (antriebsfreien) Bewegung (Rollen) des Flugzeugs über den Flugplatz, darunter auch bei stillgesetzten Hauptmotoren. Diese Bewegung schließt enge Kehrtkurven durch eine entgegengesetzte Drehung der Flugzeugräder verschiedener Fahrwerke sowie einen Rückwärtslauf ein. Weitere technische Effekte sind auch eine beachtliche Entlastung der Reibungsbremsen des Flugzeugs, die Beseitigung der Gefahr ihrer Überhitzung und eine Standzeitverlängerung der Reibungsbremsen und der Reifen.

Der technische Effekt wird erfindungsgemäß wie folgt erreicht.

Jedes Rad des Fahrwerks ist mittels einer der beiden mit dem Flugzeugrad fluchtenden gegenläufigen Luftturbinen drehbar. Eine der Luftturbinen ist mit Luft von Hauptmotoren oder einer Bord-Hilfsenergieanlage des Flugzeugs je nach der benötigten Drehrichtung über ein Rohrleitungssystem versorgt. Dabei überschreitet dieser Luftdruck den Atmosphärendruck. Dabei ist eine solche Temperatur aufrechterhalten, dass die Lufttemperatur hinter der Turbine die zulässige Materialfestigkeit der Radtrommel und der Reifen nicht überschreitet.

Vorteilhafte Weiterbildungen der Antriebsart für Flugzeugräder und ein Flugzeugfahrwerk sind den Unteransprüchen zu entnehmen.

Gemäß einer anderen Ausführungsform erfolgt die Luftversorgung der Luftturbinen der Flugzeugräder durch einen Ejektor, der die Umgebungsluft ansaugt. Diese Umgebungsluft, deren Luftdruck den Atmosphärendruck überschreitet, ist der Ejektordüse von den Hauptmotoren des Flugzeugs oder von der Bord-Hilfsenergieanlage über ein Rohrleitungssystem zugeführt. Die Luftversorgung der Flugzeugradturbinen erfolgt entweder direkt oder über die Ejektordüse mittels einer Abzapfung bei den Verdichtern der Haupt-Gasturbinentriebwerke des Flugzeugs oder von der Bord-Hilfsenergieanlage oder vom Verdichter eines Turboladers, dessen Verdichter und Turbine mit der angesaugten Luft der Hauptmotoren oder mit der Luft des Aufladesystems der Kolbentriebwerke des Flugzeuges versorgt sind. Dabei erfolgt die Steuerung der Flugzeugradbeschleunigung auf die erforderliche Drehgeschwindigkeit des Rads beim Aufsetzen mit Hilfe eines Luftsteuerventils. Diese Luft ist der Flugzeugradturbine nach einem Signal zugeführt, welches durch eine Signalvergleichseinheit erzeugbar ist. Die Signalvergleichseinheit vergleicht die Signale eines Eigengeschwindigkeitsgebers des Flugzeugs und eines Rad-Drehzahlgebers.

Die Vorteile der beanspruchten Erfindung umfassen eine beachtliche Bremsleistungssteigerung der Flugzeugräder beim Normal- und Schnellbremsen, eine Verminderung der Gefahr der Bremsenüberhitzung, eine zuverlässige autonome Bewegung des Flugzeugs über den Flugplatz, einschließlich des Rückwärtslaufs und enger Kehrtkurven, darunter bei stillgesetzten Hauptmotoren des Flugzeugs. Der weitere Vorteil ist auch eine sichere Beschleunigung (Antreiben) aller Flugzeugräder auf die Umfangsgeschwindigkeit der Felge der Reifen, die sich von der Landegeschwindigkeit des Flugzeugs nur minimal unterscheidet.

Das erfindungsgemäße Verfahren wird anhand der Zeichnungen näher erläutert. Es zeigen:

| | |
|---|---|
| Fig. 1 und 2 | allgemeine Übersichtsbilder von Ausführungsformen des Verfahrens, welche bei Gasturbinentriebwerken und insbesondere bei Zweikreistriebwerken anwendbar sind, |
| Fig. 3 | das Übersichtsbild des Verfahrens zur Anwendung bei Kolbentriebwerken mit einem angetriebenen Auflader, |
| Fig. 4 | bezieht sich auf Kolbentriebwerke mit einem Turbolader und |
| Fig. 5 | auf Kolbentriebwerke mit einem angetriebenen Auflader und einem Turbolader und |
| Fig. 6 | das Grundschaltbild einer Drehgeschwindigkeitsregelung der Flugzeugräder. |

Folgende Betriebsarten sind bei der Ausführung des Verfahrens in den Flugzeugen mit Gasturbinentriebwerken möglich:

Die Hauptmotoren sind stillgesetzt. Das Flugzeug manövriert unabhängig auf dem Flugplatz. Dabei wird die Luft von der Bord-Hilfsenergieanlage benutzt, um die Räder des Fahrwerks anzutreiben.

Die Hauptmotoren laufen. In diesem Fall sind der Räderantrieb zwecks Beschleunigung der Räder vor dem Aufsetzen, das Bremsen des Flugzeugs sofort nach dem Aufsetzen, die Manövrierung (Rollen) auf dem Flugplatz vor dem Start oder nach der Landung, einschließlich des Rückwärtslaufs, sowie der Start des Flugzeugs möglich. In all diesen Fällen ist eine Luftversorgung des Sammlers des Fahrwerks wie folgt möglich:

- Abzapfung von Luft hinter dem Gebläse des Zweikreistriebwerks,
- Abzapfung von Niederdruckluft vom Motorverdichter,
- Abzapfung von Hochdruckluft vom Motorverdichter,
- Luftzuführung von einer Bord-Hilfsenergieanlage.

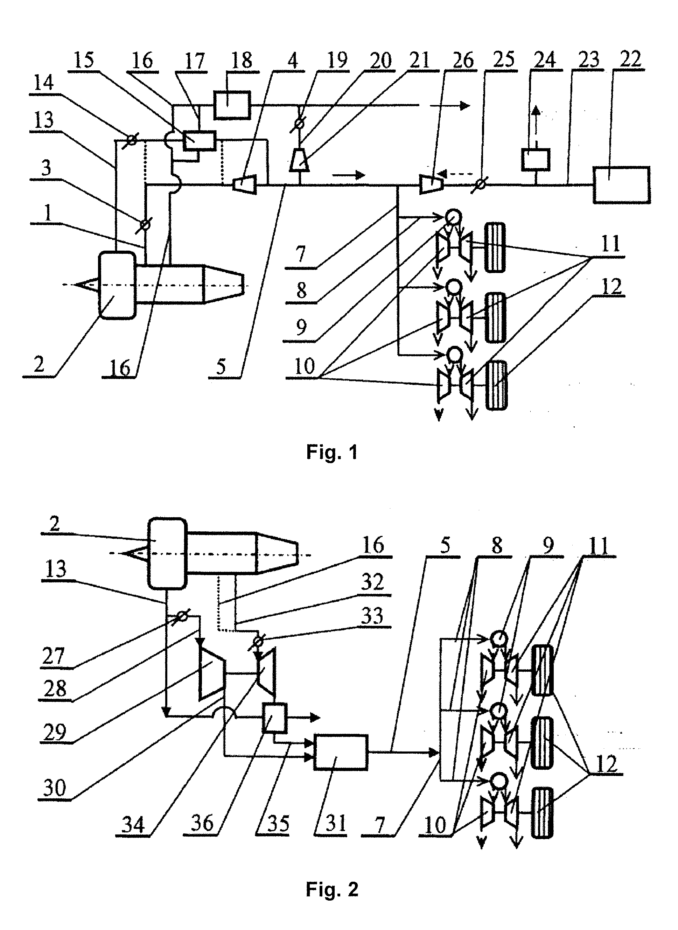

Ausführungsform des erfindungsgemäßen Verfahrens in einem Flugzeug mit Gasturbinentriebwerken gemäß Fig. 1 für ein Zweistrom-Turbinen-Luftstrahltriebwerk (Turbofan)

Die Luft für den Räderantrieb des Fahrwerks ist der Rohrleitung 1 einer normalen Luftabzapfung (Luftansaugung) von Motor 2 entnommen, welche den Eigenbedarf des Motors 2 an Druckluft abdeckt. Diese Luft strömt über eine offene Klappe 3 zu einem Ejektor 4. Im Ejektor 4 ist der Druck durch einen Umgebungslufteinbruch und eine Luftströmungstemperatur abbaubar. Vom Ejektor 4 aus fließt die aufbereitete Luft über eine Rohrleitung 5 in einen Luftsammler 7 des Fahrwerks. Aus dem Luftsammler 7 des Fahrwerks fließt die Luft über ein System von Auslassstutzen 8 und über Steuerventile 9 an eine der Turbinen 10 oder 11, welche die Flugzeugräder 12 des Fahrwerks gegenläufig antreiben.

Gemäß einer anderen Ausführungsform ist die Luft aus dem Motor hinter einer Gebläsestufe des Turbofans angesaugt und über die Rohrleitung 13 mit einer darin eingebauten Klappe 14 in einen Wärmetauscher 15 gefördert. Hier ist sie mit der vom Motor 2 abgezapften Hochdruckluft erwärmt und in die Rohrleitung 5 gefördert. Die gestrichelte Linie zeigt Rohrleitungen, mit denen die Luft aus der Rohrleitung 1 in den Wärmetauscher 15 kommen kann, um sie vor dem Eintritt in den Ejektor 4 zu erwärmen.

Ein Teil der dem Motor 2 über die Rohrleitung 16 entnommenen Hochdruckluft ist in den Wärmetauscher 15 über die Rohrleitung 17 gefördert. Diese Hochdruckluft erwärmt dann die hinter der Gebläsestufe abgenommene Luft. Danach ist diese Luft zusammen mit der Hauptluftströmung der Rohrleitung 16 in einen Wärmetauscher 18 der Klimaanlage (in Fig.1 nicht abgebildet) sowie in andere Systeme des Flugzeugs gefördert. Gemäß der Ausführungsform mit der angesaugten Hochdruckluft ist diese Luft in die Rohrleitung 5 über die offene Klappe 19 bei geschlossenen Klappen 3 und 14 und über die Rohrleitung 20 in den Ejektor 21 gefördert. Hier ist der Druck durch den Umgebungslufteinbruch und die Luftströmungstemperatur abgebaut. Die aufbereitete Luft fließt vom Ejektor 21 aus über die Rohrleitung 20 in die Rohrleitung 5 und dann in den Luftsammler 7 des Fahrwerks.

Bei stillgesetzten Hauptmotoren ist die Luft in den Luftsammler 7 auch bei geschlossenen Klappen 3, 14 und 19 von der Bord-Hilfstriebwerksanlage 22 des Flugzeugs gefördert. Von der Triebwerksanlage 22 aus ist die Luft über die Rohrleitung 23 in einen Wärmetauscher 24 gefördert, um die Luft für die Klimaanlage (in Fig.1 nicht abgebildet) aufzubereiten. Über die offene Klappe 25 fließt die Luft aus der Rohrleitung 23 in einen Luftejektor 26. Hier ist der Druck durch den Umgebungslufteinbruch und die Luftströmungstemperatur abgebaut. Aus dem Ejektor 6 fließt die aufbereitete Luft in die Rohrleitung 5 und danach in den Luftsammler 7 des Fahr-werks.

Wenn der Flugzeugbetrieb keiner Luftversorgung aus dem Luftsammler 7 des Fahrwerks bedarf, sind die Klappen 3, 14, 19 und 25 geschlossen.

Im Falle der Beschleunigung der Räder vor dem Aufsetzen bei offener Klappe 14 ist die Luft hinter der Gebläsestufe des Turbofans abgenommen. Danach ist die Luft über die Rohrleitung 13 in den Wärmetauscher 15 und dann in die Rohrleitung 5 und den Sammler 7 gefördert. Vom Sammler 7 aus ist die Luft über die Auslassstutzen 8 den Steuerventilen 9 zugeführt. Von da aus ist die Luft den Luftturbinen 11 zugeführt, welche die Flugzeugräder beschleunigen. Somit sind die Umfangsgeschwindigkeit an der Felge des Flugzeugrads und die Landegeschwindigkeit des Flugzeugs abgeglichen. Nachdem die Räder die Landebahn berührt haben, schalten die Steuer-ventile 9 die Luftversorgung auf die Luftturbinen 10 um, die entgegengesetzt zu den Turbinen 11 laufen, und bremsen somit die Räder mit Hilfe der Turbine 11 ab, wobei die Reibungsbremsen der Räder teilweise entlastet werden. Durch Umschaltung der Steuerventile 9 ist die Luft den Luftturbinen 11 zugeführt, um auf der Landebahn zu rollen und zu manövrieren.

Fig. 2 zeigt eine Ausführungsform des Verfahrens, wonach ein Turbolader verwendet ist. Um die Räder des Fahrwerks anzutreiben, ist ein Teil der Luft aus der Rohrleitung 13 abgezapft. Die Luft kommt hierher von dem Außenkreis des Bläsertriebwerks 2 und ist über die offene Klappe 27 in die Rohrleitung 28 gefördert. Von der Rohrleitung 28 fließt die Luft in einen Verdichter 29 eines Turboladers. Von da aus ist die Luft über die Rohrleitung 30 in eine Mischvorrichtung 31 gefördert. Die Hochdruckluft (Höchstdruckluft) von Motor 2 ist von der Rohrleitung 32 über die offene Klappe 33 in die Turbine 34 des Turboladers gefördert und dann über die Rohrleitung 35 in den Wärmetauscher 36 weitergeleitet. Die im Wärmetauscher 36 abgekühlte Luft fließt in die Mischvorrichtung 31. Im Wärmetauscher 36 ist die Luft durch die Luft des zweiten Kreises des Motors 2 gekühlt. Diese Kühlluft ist in den Wärmetauscher 36 über die Rohrleitung 13 gefördert. Nach der Vermengung der zwei Strömungen in der Mischvorrichtung 31 ist die Luft mit einer Soll-Temperatur und einem Solldruck über die Rohrleitung 5 in den Luftsammler 7 des Fahrwerks gefördert. Aus dem Luft-sammler 7 des Fahrwerks ist die Luft über ein System von Auslassstutzen 8 und über Steuerventile 9 an eine der Turbinen 10 oder 11 gefördert, welche die Flugzeugräder 12 des Fahrwerks gegenläufig antreiben. Die gestrichelte Linie in Fig. 2 zeigt die Rohrleitung 16 aus Fig. 1, welche der Zwischenansaugung von Hochdruckluft entspricht. Diese kann als eine Alternative für die Luftzuleitung an die Turbine des Turboladers benutzt werden.

Bei der Ausführung des Verfahrens in den Flugzeugen mit Kolbenmotoren sind folgende Betriebsarten möglich:

Die Hauptmotoren (Motor) sind stillgesetzt. Das Flugzeug manövriert unabhängig auf dem Flugplatz. Dabei ist Luft des autonom laufenden Turboladers benutzt, um die Räder des Fahrwerks anzutreiben.

Die Hauptmotoren sind in Betrieb. In diesem Fall sind der Räderantrieb zwecks Beschleunigung vor dem Aufsetzen, das Bremsen des Flugzeugs sofort nach dem Aufsetzen, die Manövrierung auf dem Flugplatz vor dem Start oder nach der Landung möglich. In all diesen Fällen kann die Luft in den Sammler des Fahrwerks wie folgt gefördert werden:

- Abzapfung der Luft aus der Rohrleitung der Motoraufladung mittels eines angetriebenen Aufladers,
- Abzapfung der Luft aus der Rohrleitung der Motoraufladung mittels eines Verdichters des Turboladers,
- Abzapfung der Luft aus einer Zwischenkühlrohrleitung zwischen dem angetriebenen Auflader und dem Verdichter des Turboladers.

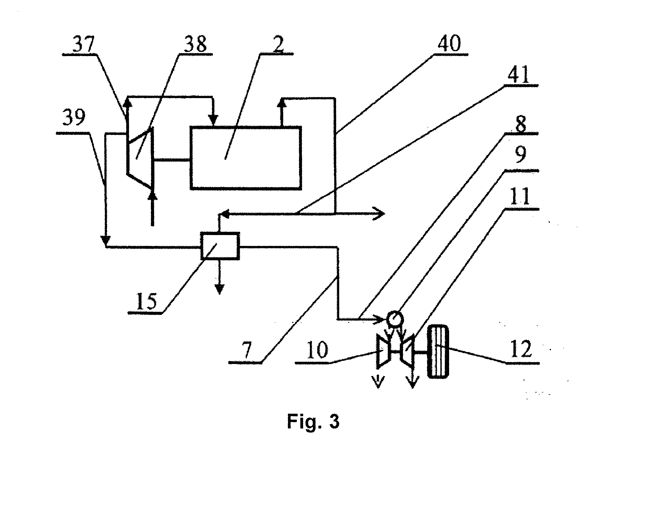

Durchführung des erfindungsgemäßen Verfahrens in einem Flugzeug mit einem Kolbenmotor und einem angetriebenen Verdichter gemäß Fig. 3

Die Luft ist mittels eines angetriebenen Aufladers 38 in die Aufladungsrohrleitung 37 des Kolbenmotors 2 eingeblasen. Ein Teil der Luft ist von der Rohrleitung 37 abgezapft und über die Rohrleitung 39 und den Wärmetauscher 15 in den Luftsammler 7 des Fahrwerks gefördert. Aus dem Luftsammler 7 des Fahrwerks ist die Luft über ein System von Auslassstutzen 8 und über Steuerventile 9 an eine der Turbinen 10 oder 11 weitergeleitet, die die Flugzeugräder 12 des Fahrwerks gegenläufig antreiben. Die Luft ist im Wärmetauscher 15 durch einen Teil von Abgasen des Motors 2 erwärmt. Die Abgase sind der Auspuffleitung 40 entnommen und über die Rohrleitung 41 in den Wärmetauscher 15 gefördert.

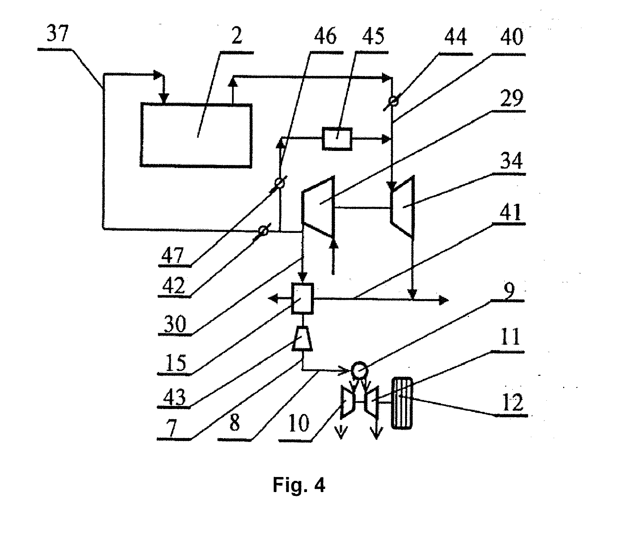

Durchführung des erfindungsgemäßen Verfahrens im Flugzeug mit Kolbenmotor und mit Turbolader gemäß Fig. 4

Die Luft ist mittels eines Verdichters 29 des Turboladers in die Aufladungsrohrleitung 37 des Motors 2 eingeblasen. Von der Aufladungsrohrleitung 37 ist ein Teil der Luft bei offener Klappe 42 abgenommen und über die Rohrleitung 30 und den Wärmetauscher 15 der Düse eines Luftejektors 43 zugeführt. Von dem Ejektor 43 fließt die Luft in den Luftsammler 7 des Fahrwerks. Aus dem Luftsammler 7 des Fahrwerks ist die Luft über ein System von Auslassstutzen 8 und über Steuerventile 9 an eine der Turbinen 10 oder 11 gefördert, welche die Flugzeugräder 12 des Fahrwerks gegenläufig antreiben. Die Abgase von Motor 2 sind über eine Auspuffleitung 40 über eine offene Klappe 44 der Turbine 34 des Turboladers zugeführt, welche den Verdichter 29 drehen lässt. Die Luft ist im Wärmetauscher 15 mit Abgasen der Turbine 34 des Turboladers erwärmt. Dafür sind sie über die Rohrleitung 41 in einen Wärmetauscher 15 gefördert.

Bei stillgesetztem Hauptmotor 2 sind Klappen 42 und 44 zu, und ein Turbogenerator läuft unabhängig vom Hauptmotor 2 dadurch, dass die Brennkammer 45 benutzt wird. Dabei ist die Luft hinter dem Verdichter 29 aus der Rohrleitung 37 in die Rohrleitung 46 über die offene Klappe 47 abgenommen und in die Brennkammer 45 des Turboladers gefördert. Die Heißgase der Brennkammer 45 sind in die Rohrleitung 40 und von da aus in die Turbine 34 gefördert. Ein Teil der Abgase ist von der Turbine 34 in einen Wärmetauscher 15 über die Rohrleitung 41 gefördert.

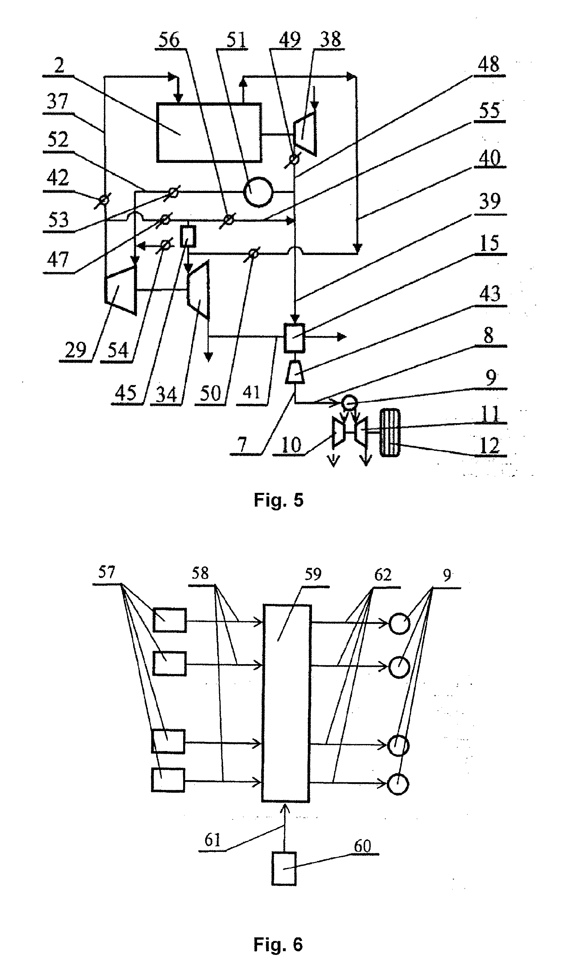

Fig. 5 zeigt ein Übersichtsbild für die Durchführung des Verfahrens in einem Flugzeug mit Kolbenmotor mit einem angetriebenen Auflader und einem Turbolader. Um die Räder des Fahrwerks anzutreiben, ist ein Teil der Luft der Rohrleitung 48 des angetriebenen Aufladers 38 über die offene Klappe 49 entnommen und über die Rohrleitung 39 und den Wärmetauscher 15 der Düse des Luftejektors 43 zugeführt. Vom Luftejektor 43 fließt die Luft in den Luftsammler 7 des Fahrwerks. Aus dem Luftsammler 7 des Fahrwerks ist die Luft über ein System von Auslassstutzen 8 und über Steuerventile 9 an eine der Turbinen 10 oder 11 weitergeleitet, welche die Flugzeugräder 12 des Fahrwerks gegenläufig antreiben.

Die Abgase von Motor 2 sind der Turbine 34 der Turboaufladungsanlage über die Auspuffleitung 40 durch die offene Klappe 50 zugeführt. Ein Teil der Abgase ist von der Turbine 34 über die Rohrleitung 41 dem Wärmetauscher 15 zugeführt. Hier ist die Luft erwärmt, bevor sie in die Ejektordüse 43 fließt. Der Hauptteil der Luft von der Rohrleitung 48 des angetriebenen Aufladers 38 ist in einem Zwischenkühler 51 gekühlt und über die Rohrleitung 52 durch die offene Klappe 53 in den Verdichter 29 des Turboladers weitergeleitet. Danach ist die Luft im Verdichter 29 des Turboladers verdichtet und über die Rohrleitung 37 durch die offene Klappe 42 dem Motor 2 zugeführt.

Bei stillgesetztem Hauptmotor 2 sind die Klappe 42 in der Rohrleitung 37 und die Klappe 49 geschlossen. Die Freiluft ist in den Verdichter 29 des Turboladers über die offene Klappe 54 des Turboladers gefördert. Dabei ist die Rohrleitung 52 mit der Klappe 53 gesperrt. Die Druckluft hinter dem Verdichter 29 ist von der Rohrleitung 37 über die Rohrleitung 55 durch die geöffneten Klappen 47 und 56 in die Rohrleitung 39 geleitet. Aus der Rohrleitung 39 fließt die Luft über den Wärmetauscher 15 in die Düse des Luftejektors 43 und dann in den Luftsammler 7 des Fahrwerks. Aus dem Luftsammler 7 des Fahrwerks ist die Luft über ein System von Auslassstutzen 8 und über Steuerventile 9 an eine der Turbinen 10 oder 11 geleitet, welche die Flugzeugräder 12 des Fahrwerks gegenläufig antreiben. Ein Teil der Luft von der Rohrleitung 55 ist der Brennkammer 45 des Turboladers zugeführt. Danach sind die Heißgase der Turbine 34 zugeführt. Von da aus ist ein Teil der Abgase in einen Wärmetauscher 15 über die Rohrleitung 41 gefördert.

Fig. 6 zeigt eine Regelschaltung für die Drehzahl der Flugzeugräder. Die Signale der Drehzahlgeber 57 kommen über die Leitungen 58 in einen Bordcomputer 59. Der Bordcomputer 59 bekommt auch ein Signal vom Fahrmessgeber 60 des Flugzeugs über die Leitung 61. Beim Vergleich der Signale von den Gebern 57 und 60 im Computer 59 werden Steuersignale erzeugt, die über Leitungen 62 an jeweilige Steuerventile 9 geschickt werden, die für die Luftversorgung der Flugzeugradturbinen sorgen.

Die Auslegungsbegründung des erfindungsgemäßen Verfahrens bezieht sich auf ein als Beispiel betrachtetes Flugzeug Iljuschin II-96-300 mit vier PS-90A (ПС-90A) Motoren und zwei Hauptfahrwerken mit je drei Radpaaren.

Beispiel 1 Beschleunigung der Räder vor dem Aufsetzen

Die auslegungsmäßige Bewertung der Ausführbarkeit der erfindungsgemäßen Einrichtung ist in Bezug auf die Kenndaten des Flugzeugs ILJUSCHIN IL-96-300 mit 1300x480x560 Reifen angeführt. Gesetzt den Fall, dass das Rad des Fahrwerks sich auf eine Umfangsgeschwindigkeit beschleunigt, die gleich der Landegeschwindigkeit des Flugzeugs $V$ = 250 km/h = 69,4 m/sec ist, dann ist die Drehwinkelgeschwindigkeit des Rades $\omega_w$ = $V / R$ = 106,84 1/sec, wobei R der Reifenhalbmesser ist und 650 mm beträgt. Dabei beträgt die Drehzahl des Rads n = 1020 U/min, die Drehungsenergie des Rads $E_W = J\omega_W^2/2$, wobei $J$ das Trägheitsmoment des Rads ist.

Man nehme an, dass das Trägheitsmoment des kompletten Rads sich aus der Summe von Trägheitsmoment $J_1$ des Rads ohne Reifen und dem Trägheitsmoment $J_2$ des Rads mit dem Reifen zusammensetzt. Die Masse des Radsatzes bei ILJUSCHIN IL-96-300 komplett mit Reifen (S.S.Kokonin, E.I.Kramarenko, A.M.Matveyenko. Entwurfsgrundlagen für Flugzeugräder und Bremssysteme. M. MAI, 2007. - 263 S.) beträgt 322 kg, und die Masse des Reifens selbst ist 106 kg, d. h. die Radmasse ohne Reifen ist 216 kg. Wird das Rad ohne Reifen bedingt als eine homogene Scheibe und der Reifen selbst als ein homogenes dickwandiges Rohr betrachtet, dann ist

$$J_1 = m_1 R_1^2 / 2 = 8{,}47 \text{ kg·m}^2, \quad J_2 = m_2(R_2 + R_1^2)/2 = 26{,}55 \text{ kg·m}^2, \quad J_1 + J_2 = 35{,}015 \text{ kg·m}^2$$

Dann beträgt die kinetische Energie des beschleunigten Rads ca. 200 kJ. Man nehme an, dass die Beschleunigungsdauer des Rads vom Ruhezustand auf die gewünschte Geschwindigkeit 30 Sekunden beträgt. Dann beläuft sich die ausreichende Leistung der Luftturbine des Räderantriebs auf 6,7 kW, und die Gesamtantriebsleistung aller 12 Haupträder macht 80 kW aus. Für weitere Berechnungen gilt, dass es sich bei der Luftturbine des Rads des Fahrwerks um eine Unterschall-Radial-Einfachturbine mit partieller Luft-Beaufschlagung handelt. Der Durchmesser eines Radialspalts zwischen den Düsenschaufeln und den Laufschaufeln ist 0,6 m, die Schaufelhöhe ist 0,01 m, der Beaufschlagungsgrad ist 0,2, der Wirkungsgrad der Turbine liegt bei 0,45. Alle Berechnungen gelten unter der Voraussetzung, dass die Lufttemperatur hinter der Turbine während der Bewegung der Räder 125° C nicht überschreitet (S.S. Okonin und andere).

Beispiel 2 Luftansaugung hinter der Gebläsestufe

Beim Mindest-Luftdruck in Motorluftabzapfungen bei einem PS-90A (ПC-90A)-Motor (A.A. Inozemtsev, E.A. Konyayev, V.V. Medvedev, A.V. Neradyko, A.E. Ryasov. Flugzeugmotor PS-90A, M. 2007. - 319 Seiten) handelt es sich um den Luftdruck hinter dem Gebläse. Im Startbetriebszustand liegt das Druckverhältnis bei 1,67 und im Reisebetriebszustand bei 1,75. Der Durchschnittswert liegt dann bei 1,7. Diese Druckdifferenz kann in einer Unterschall-Einfachturbine erreicht werden.

Gesetzt den Fall, dass die Gesamtleistung des Antriebs für alle Räder des Flugzeugs 360 kW ist, dann ist die Luftansaugung von einem Motor (für drei Räder des Fahrwerks) hinter der Gebläsestufe gleich 3,35 kg/sec. Bei einem Gesamtluftverbrauch von 504 kg/sec über den Motor-Innenkreis und bei einem Durchsatzverhältnis des Motors von 4,5 liegt dieser Verbrauchswert unter 0,15% des Luftverbrauchs im Außenkreis. Die Lufttemperatur hinter den Turbinen der Räder ist 120,4° C. Die Lufttemperatur in der Abzapfung kann schätzweise bei 358 K liegen. Die angeführten Angaben gelten unter der Annahme, dass die Abzapfungsluft im Wärmetauscher um 62° C, und zwar auf 420 K, erwärmt wird. Wird die Abzapfung aus dem zweiten Motorkreis benutzt, so kann ein großer Luftverbrauch erreicht werden. Zum Beispiel bei einer angenommenen Radbremsen-Turbinenleistung von 500 kW, einer Schaufelhöhe von 50 mm, einer Vollluftbeaufschlagung des Turbinenlaufrads und einem Wirkungsgrad der Turbine von 0,88 wird der Luftverbrauch pro Rad 9,53 kg/sec betragen. Dabei liegt der Abzapfungs-luftverbrauch von einem Motor bei 28,58 kg/sec. Das macht 1,26% des Luftverbrauchs im zweiten Motorkreis aus. Die durchschnittliche Bremsenleistung von Iljuschin II-96-300 (S.S. Kokonin et al.) beträgt 1471 kW. Folglich beläuft sich die Bremsturbinenleistung auf 34% der Bremsenleistung. Dadurch kann die Überhitzung der Reibungsbremsen vermieden werden.

Um eine Unterschall-Turbinenstufe zu benutzen, ist die den Motorabzapfungen oder der Hilfsenergieanlage entnommene Hochdruckluft dem Ejektor zugeführt. Der Ejektor baut den Luftdruck vor der Turbine ab, erhöht jedoch den Luftverbrauch. Die angeführten Berechnungen gelten für einen Schallejektor im überzogenen Zustand (T.N. Abramovich. Angewandte Gasdynamik. M.: Nauka, 1969. - 824 S.).

Beispiel 3 Nutzung der Luft aus der Bord- Hilfsenergieanlage

Wird eine TA-12-Hilfsenergieanlage als Luftquelle benutzt (Luftverbrauch 1,6 kg/sec, Druck 4,9 kgs/cm², Temperatur 250° C, s. "Luftmotorenbau" (Aviadvigatelestroyeniye). Enzyklopädie. M. 1999. - 300 S.), so beträgt der Gesamtluftverbrauch nach dem Ejektor 2,97 kg/sec, die Flugzeugradturbinenleistung ist 7,2 kW, und die Gesamtleistung der Flugzeugräder ist 86,3 kW. Die Lufttemperatur hinter der Luftturbine ist 118,3° C. Dabei gilt, dass die Luft nach der TA-12 sofort dem Ejektor zuführbar ist, ohne die Lufttemperatur zu verändern. Die Vergleichsleistung von TA-12 beträgt 287 kW und entspricht der Anlagenluftdehnung in einer Turbine mit einem Wirkungsgrad von 0,92. Diese spürbare Differenz zwischen der berechneten Turbinenleistung des Antriebs und der Vergleichsleistung lässt sich durch einen niedrigen Wirkungsgrad der Luftturbinen der Räder erklären, der gleich 0,45 angenommen ist. Das hängt mit einer partiellen Luft-Beaufschlagung des Turbinenrads zusammen.

Beispiel 4 Luftansaugung hinter den Mitteldruckstufen des Verdichters

Der Abzapfungsluftdruck ist ca. 2,5 kgc/cm$^2$, und die Temperatur ist ca. 403 K. In diesem Fall ist der Verbrauch der dem Motor entnommenen Luft 2,32 kg/sec bei einer Flugzeugradturbinenleistung von 30 kW und einer Abzapfungslufterwärmung von 460 K. Das vergrößert die normale Abzapfung um ca. 21%. Die Lufttemperatur hinter der Radturbine ist 118° C. Ist die Luftabzapfung vor dem Ejektor nicht erwärmt, so steigt der Verbrauch der Abzapfung auf 2,62 kg/sec, und die Temperatur hinter der Turbine wird 80° C betragen.

Beispiel 5 Luftansaugung vom Hochdruckverdichter

Das Druckverhältnis beim PS-90A (ПС-90A) Motor beträgt 35, und das Druckverhältnis in der Abzapfung hinter der VII. Stufe von Hochdruckverdichtern kann schätzungsweise bei 27,77 liegen. Ist die Abzapfungsluft auf 600 K gekühlt, so beträgt der Verbrauch der dem Motor entnommenen Luft 1,26 kg/sec bei einer Flugzeugradturbinenleistung von 30 kW. Das macht ca. 10% des Luftverbrauchs der zur Kühlung von Düsen- und Arbeitsschaufeln (ca. 12,39 kg/sec) hinter der VII. Stufe entnommenen Luft aus. Die Lufttemperatur hinter der Turbine des Antriebs beträgt dabei 120,7° C.

Aus dem Stand der Technik ist eine Brems- und Manövrierungseinrichtung für Flugzeuge bekannt (Steven Sallivan, RU 2403180). Gemäß dieser Einrichtung ist ein elektrischer Scheibenmotor/-generator in einer Radtrommel angeordnet. Diese Scheiben wirken zugleich als Scheiben der Reibungsbremse.

Der Mangel dieser Einrichtung ist eine Erschwerung des Fahrwerks durch E-Motoren und des Flugzeugs selbst wegen spezieller Hochleistungs-Bordakkus im Falle der aufgespeicherten zurückgewonnenen Bremsenergie. Die Erzeugung von effektiven elektromagnetischen Kräftemomenten, die für die Flugzeugbewegung während der Manövrierung ausreichen, in einem kleinen Umfang der Bremsscheiben ist technisch schwierig und erschwert wesentlich die Fertigung, den Betrieb und die Instandsetzung des Radantriebs.

Durch Rod F. Soderberg, UK Patent 2436042, ist eine Einrichtung für Flugzeugräder bekannt. Diese Einrichtung weist innerhalb einer Radtrommel angeordnete spezielle Wicklungen oder Spulen oder elektrisch magnetisierbare Stoffe auf, die an den Ständer- und Läuferbauteilen des Rads, mit Ausnahme von Bremsscheiben, befestigt oder darin eingeformt sind und die Entstehung von den auf das Rad einwirkenden Drehkräften hervorrufen.

Die Mängel der Einrichtung sind eine Erschwerung des Fahrwerks wegen der innerhalb der Radtrommel angeordneten Wicklungen der E-Motoren und schwere Temperaturbedingungen, unter welchen diese Wicklungen während der Schnell-bremsung arbeiten müssen, besonders wenn auf den Start unmittelbar vor der Abhebung des Flugzeugs von der Bahn verzichtet wird. Nach Angaben aus der Fachliteratur (S.S.Kokonin usw.) kann die Bremsentemperatur ohne Kühlung bei aufeinanderfolgenden Landungen, besonders bei Kurzflügen, 600° C erreichen. Das setzt den Einsatz von hochtemperaturbeständigen Elektroisolierstoffen für Wicklungen sowie Maßnahmen für ihre zusätzliche Kühlung voraus. Darüber hinaus müssen diese Isolierstoffe unter hohen Schlag-, Stoß- und Vibrationsbeanspruchungen sicher arbeiten. Alle diese Tatsachen führen bei Hochleistungs-Bremseinrichtungen zu großen entwicklungs-, werkstoffkunde- und betriebsspezifischen Problemen.

Durch die RU 2222473 (V.N. Parfyonov, V.A. Maximov, D.P. Yamkovenko, V.P. Klinkov, V.A. Nikolaev) ist ein Fahrzeugrad bekannt, bei dem eine Lamellenbremse in einem mit Freiluft kommunizierenden Kühlraum angeordnet ist, um die Kühlung zu verbessern. Zusätzlich dazu ist ein Sammelring ausgebildet, dessen Eintritt mit einem Luftauflader kommuniziert und dessen Austritt über Durchflussöffnungen mit dem Kühlungsraum und mit einem Raum zwischen einem Bremszylinderblock und einer ringförmigen Scheidewand kommuniziert.

Der Mangel der erfindungsgemäßen Einrichtung ist die Kühlung des Lamellenpakets der Bremse wegen der Spülung von nur zylindrischen und Endteilen der Paketlamellen mit Kühlluft sowie die Nichtbenutzung von Spalten zwischen den beweglichen und festen Lamellen bei gelöster Bremse, weil diese Spalten zu klein sind. Das vermindert die Intensität der Reibungsbremsenkühlung.

Durch die RU 2126503 (Claude Ankur, Yvonne Ankur) ist eine Bremseinrichtung eines Fahrzeugrads bekannt. Um die Scheiben-Rotoren zu kühlen, sind sie in dieser bekannten Einrichtung mit Innenkanälen für einen Luftdurchgang versehen. Die Luft kommt über eine Innenöffnung in den Scheiben die Radachse entlang. Um den Lufteintritt zu verbessern, tritt der axiale Schlitzkanal in ein am festen Radteil befestigtes Gehäuse aus. Der offene Teil des Gehäuses ist der Luftanströmung während der Fahrzeugbewegung entgegengerichtet. Es wird vorgeschlagen, diese Einrichtung zu benutzen, auch um die Räder des Flugzeugs vor dem Aufsetzen zu beschleunigen, und zwar unter der Annahme, dass die Scheiben-Rotoren als Zentrifugal-Luftturbinen eingesetzt werden.

Diese Einrichtung hat den Mangel, dass es keinen ausreichenden Raum zwischen dem Randgebiet der Scheiben-Rotoren und dem Felgenbereich der Räder gibt. Dieser Raum könnte einen freien Luftaustritt aus den Laufrädern und folglich den Luftverbrauch und die Turbinenleistung sicherstellen. Darüber hinaus gibt es Spalte zwischen den Scheiben-Statoren und den Scheiben-Rotoren bei gelöster Bremse. Die Luft wird durch diese Spalte neben den Kanälen in Scheiben-Rotoren passieren. Das wird die Möglichkeit der Beschleunigung des schweren Flugzeugrads vermindern und zwar dadurch, dass die Scheiben-Rotoren als Zentrifugal-Luftturbinen arbeiten. Diese zur Kühlung der Bremsscheiben vorgesehene Bremseinrichtung hat den Mangel, dass die Kühlung nicht wirksam ist, wenn die Fahrgeschwindigkeit des Fahrzeugs nicht hoch genug ist.

Die durch die Erfindung zu lösende Aufgabe ist die Herstellung eines leistungsstarken Antriebs für Flugzeugräder, welcher die Beschleunigung der Räder vor dem Aufsetzen, das teilweise Bremsen der Räder nach der Landung sowie die Manövrierung und das Bremsen einschließlich des Rückwärtslaufs und der engen Kehrtkurven auf dem Flugplatz sicherstellt. Die zusätzliche Aufgabe ist, die autonome Boden-Manövrierung des Flugzeugs vor dem Anlaufen der Hauptmotoren zu ermöglichen. Die Erfindung ist des Weiteren darauf abgezielt, den Reifenverschleiß abzubauen, den Gummiabrieb auf den Flugpisten der Flugplätze zu vermeiden und eine intensive Kühlung der energieaufwendigen Bremsen sicherzustellen, um ihre Abkühlzeit zu verkürzen.

Der durch die Erfindung erreichbare technische Effekt ist die Möglichkeit, die Räder des Fahrwerks unter Veränderung der Drehrichtung mit einer solchen Leistung anzutreiben, welche sowohl für die Landebeschleunigung der Räder (Beschleunigung der Räder vor dem Landen) als auch für das planmäßige und scharfe Bremsen und für die Manövrierung auf dem Flugplatz einschließlich enger Kurven, darunter bei stillgesetzten Hauptmotoren, ausreicht. Der weitere technische Effekt ist auch die Verlängerung der Lebensdauer der Reibungsbremsen und der Reifen, die Erhöhung der Betriebssicherheit der Gummireifen, die Verschleißminderung der Reifen und die Vermeidung des Gummiabriebs auf den Start- und Landebahnen der Flugplätze. Infolge einer Zwangskühlung der Bremsen werden die Einschränkungen der intensiven Kurzflüge aufgrund der unbedingt erforderlichen Abkühlung der Bremsen auf eine zulässige Temperatur aufgehoben.

Der technische Effekt der Erfindung wird wie folgt erreicht:

Parallel mit einer Federstrebe des Fahrwerks ist eine ausziehbare teleskopierbare Rohrleitung darauf befestigt, um die Luft den Fahrwerkrädern zuzuführen. Ein fester Teil des Fahrwerks ist mittels eines Bügels an einem Stoßdämpfer befestigt. Sein ausziehbarer zum festen Teil luftdichter Stutzen ist mittels eines Bügels an einem Hilfskolben des Stoßdämpfers befestigt. Die teleskopierbare Rohrleitung ist an einer Seite an eine Druckluftquelle an Bord des Flugzeugs und an einer anderen Seite an einen Verteiler-Luftsammler der Flugzeugräder angeschlossen. An den Verteiler-Luftsammler sind luftmäßig nicht kommunizierende (luftmäßig nicht verbundene) Verteilerringsammler der Räder mittels je zwei Auslassstutzen pro Rad angeschlossen. Dabei ist jeder Auslassstutzen mit einem Steuerventil versehen. Jeder der Verteilerringsammler ist mittels Segment-Luftleitungen an seine jeweilige Radial- oder Axiallufturbine des Räderantriebs angeschlossen. Dabei weisen die Turbinen entgegengesetzte Drehrichtungen auf.

Zwischen einem Stator des Rads und dem ersten Bremsscheiben-Stator ist ein ringförmiger Wärmeschutzschild eingebaut. Anhand der über die Breite des Luftzuleitungssegments gleichmäßig angeordneten und im Stator und im Wärmeschutz-schild angebauten Stutzen ist ein Raum zwischen dem Wärmeschutzschild und dem ersten Scheiben-Stator mit dem Luftsammler des Bremsenkühlungssystems mittels Segment-Luftleitungen verbunden. Dabei sind die Verteilerringsammler der Räder, die Luftsammler des Kühlungssystems, die Segment-Luftleitungen und die Bremstrommeln in Form eines monolithischen Blocks ausgebildet, welcher auf dem Stator jedes Rads angebaut ist.

Im Scheibenteil der Felge des Rads sind Löcher gegenüber dem letzten Scheiben-Stator am Kreisumfang gleichmäßig angeordnet.

Die Segment-Luftleitungen des ringförmigen Verteilersammlers der axialen Turbine des Rads sind an ihren jeweiligen Satz der am Kreisumfang gleichmäßig angeordneten gefederten Luftzuleitungssegmente angeschlossen. Die Luftzuleitungssegmente sind gegen den ersten Bremsscheiben-Stator ständig angepresst. Die vorgefederten Segmente passen dicht in jeweilige Segment-Luftleitungen, so dass ihre Verfahrbarkeit zusammen mit dem Scheiben-Stator parallel zur Radachse möglich ist. Gegenüber den Luftzuleitungssegmenten sind Durchgangskanalsektoren in dem angrenzenden Scheiben-Stator sowie in den nachfolgenden Scheiben-Statoren der Bremse, bis auf den letzten Scheiben-Stator, ausgebildet. Dabei sind die Durchgangskanalsektoren so ausgebildet, dass die Scheiben-Statoren Düsenringe der axialen Turbine mit partieller Luft-Beaufschlagung der Laufräder darstellen.

Die Durchgangskanäle im letzten Scheibe-Stator der Bremse sind so ausgebildet, dass der letzte Scheiben-Stator einen Austrittsgleichrichter (Nachleitapparat) mit Schaufeln zur partiellen Luftableitung vom letzten Laufrad der axialen Turbine darstellt. Dabei ist die Winkelbreite der Schaufelsegmente der Scheiben-Statoren so ausgebildet, dass sie von Scheibe zu Scheibe in der Luftströmungsrichtung zunimmt. In den Scheiben-Rotoren der Radbremse sind Durchgangskanäle am Kreisumfang gleichmäßig ausgebildet und zwar so, dass die Scheiben-Rotoren Laufräder der axialen Turbine mit Schaufeln darstellen. Die Schaufeln sind gegenüber den jeweiligen Düsenschaufeln der Scheiben-Statoren angeordnet.

Die gleichmäßig am Kreisumfang verteilten Löcher im Scheibenteil der Felge des Rads liegen gegenüber den Schaufelkanälen des letzten Scheiben-Stators.

Gemäß einer anderen Ausführungsform der Einrichtung sind die Segment-Luftleitungen des ringförmigen Verteilersammlers der Radialturbine des Rads an ihren jeweiligen Satz von gleichmäßig am Kreisumfang ihres jeweiligen Durch-messers angeordneten Segmenten von radialen Düsenringen angeschlossen. Gegenüber den Düsenringen ist ein Laufrad einer Einfachturbine oder einer radialen Mehrstufenluftturbine mit einem Radialspalt an einer Innenfelge des Rads aufgebaut. Bei der Mehrstufenluftturbine handelt es sich um eine Turbine mit einigen Geschwindigkeitsstufen. Die Düsenringe der radialen Luftturbine, und im Falle des Einsatzes der Mehrstufenturbine mit einigen Geschwindigkeitsstufen der radialen Luftturbine auch die unbeweglichen Räder der Leitschaufeln, sind an einem monolithischen Block befestigt, welcher auf dem Stator jedes Rads angebaut ist.

Die am letzten Scheiben-Stator anliegende Stützstirnfläche des Bremskörpers hat radiale stirnseitige Nuten. Die Nuten bilden mit der Oberfläche des Scheiben-Stators ein System von radialen Kühlungskanälen, die mit Schlitznuten des Bremskörpers kommunizieren. Zwischen den Scheiben-Rotoren sind Zylinderringe so montiert, dass der äußere Zylinderteil der Scheiben-Rotoren einwärts der Ringe mit einem kleinen Spalt eintritt. An der äußeren Zylinderoberfläche der Ringe sind Federsektoren angebaut. Die Federsektoren sitzen in Schlitznuten des Trommelteils der Felge des Rads und stemmen sich gegen die Füße der Scheiben-Rotoren. Dabei gibt es an seitlichen Stirnflächen der Ringe Systeme von gleichmäßig am Kreisumfang angeordneten identischen Ausschnitten.

Zwischen den Scheiben-Statoren sind Zylinderringe so angeordnet, dass sie in den zylindrischen Innenteil der Scheiben-Statoren mit einem kleinen Spalt hineinpassen. An der inneren Zylinderoberfläche der Ringe sind Federsektoren angebaut, die in Schlitznuten des Bremskörpers sitzen und sich gegen die Füße der Scheiben-Statoren stemmen. An den seitlichen Stirnflächen der Ringe gibt es Systeme von gleichmäßig am Kreisumfang angeordneten identischen Ausschnitten.

Zu den Vorteilen der Erfindung zählen eine beachtliche Bremsleistungssteigerung der Flugzeugräder beim Normal- und Schnellbremsen, eine Verminderung der Gefahr der Bremsenüberhitzung und eine zuverlässige autonome Bewegung des Flugzeugs über den Flugplatz, einschließlich des Rückwärtslaufs und der engen Kehrtkurven, darunter bei stillgesetzten Hauptmotoren des Flugzeugs. Der weitere Vorteil ist auch eine sichere Beschleunigung aller Flugzeugräder auf die Umfangsgeschwindigkeit der Felge der Reifen, die sich von der Landegeschwindigkeit des Flugzeugs minimal unterscheidet.

Das erfindungsgemäße Einrichtung wird anhand der Zeichnungen erklärt.

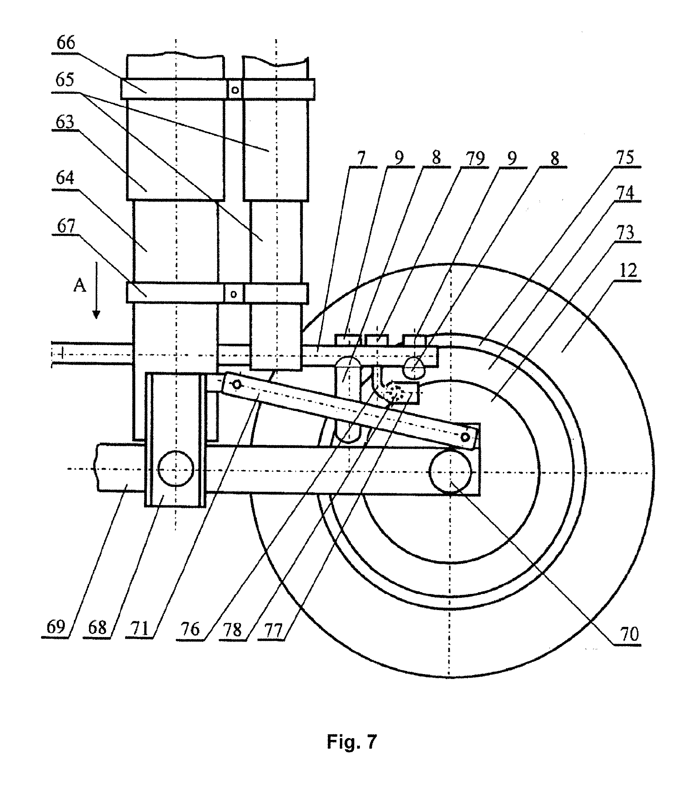

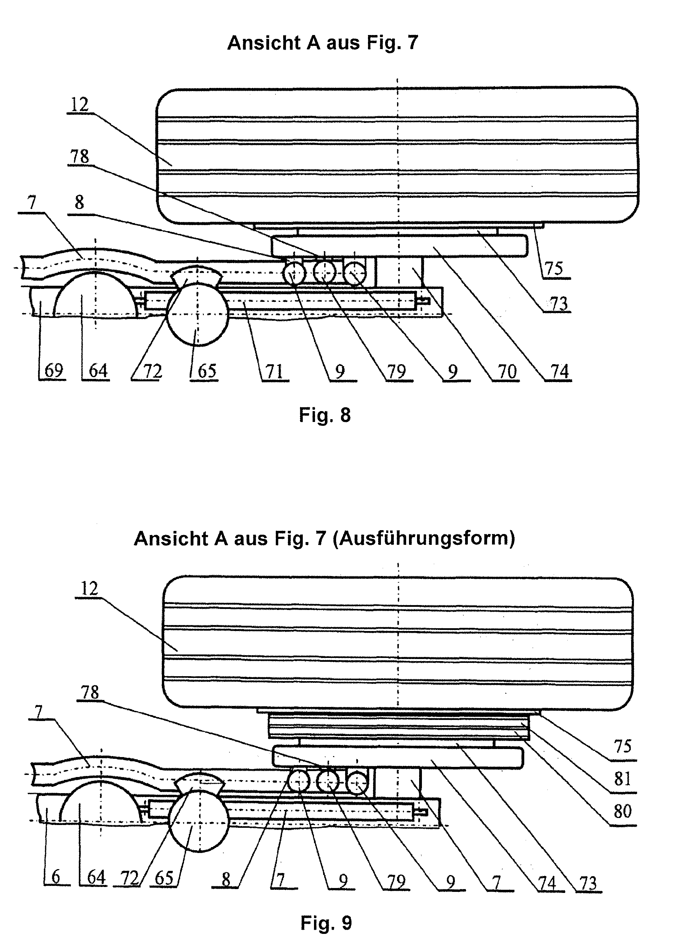

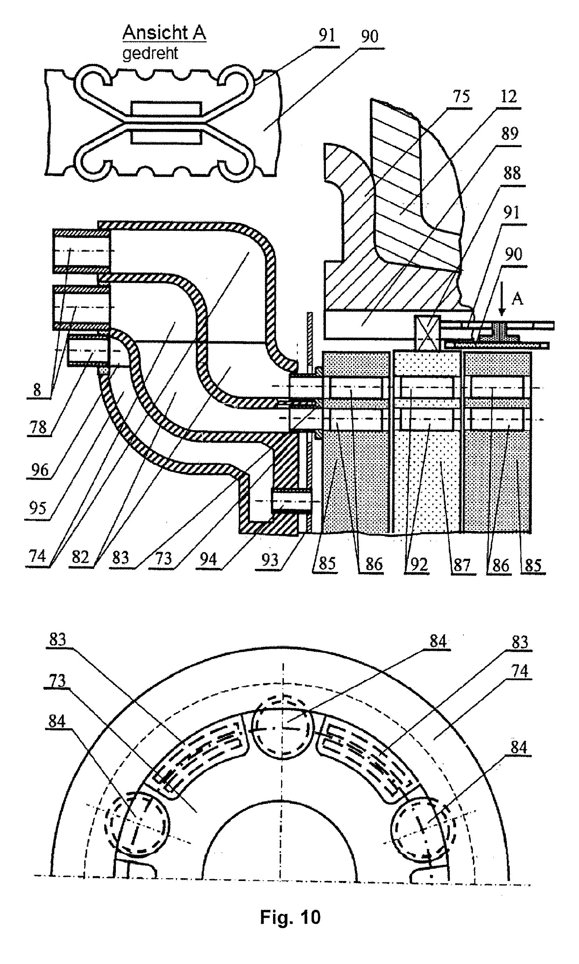

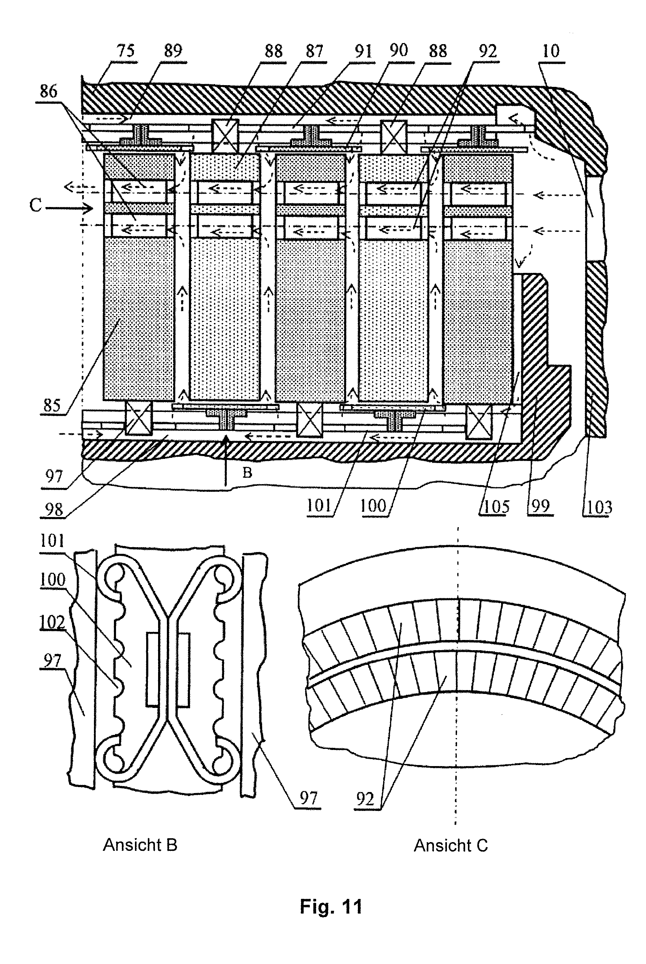

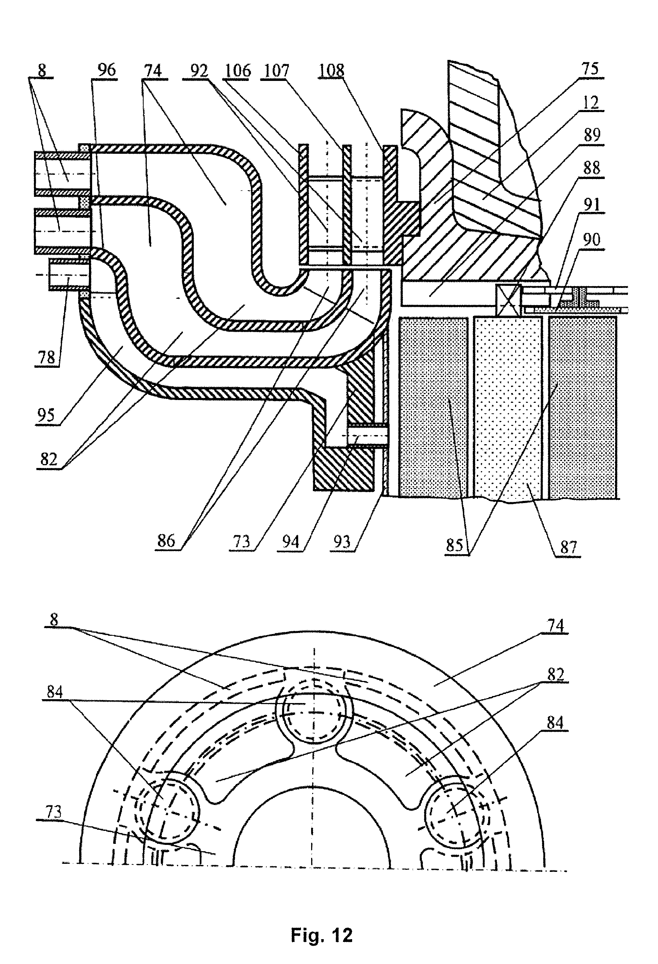

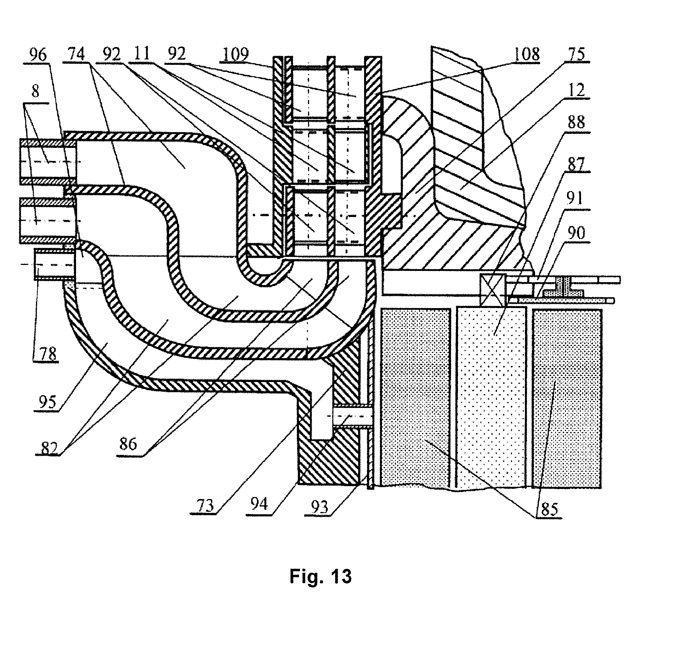

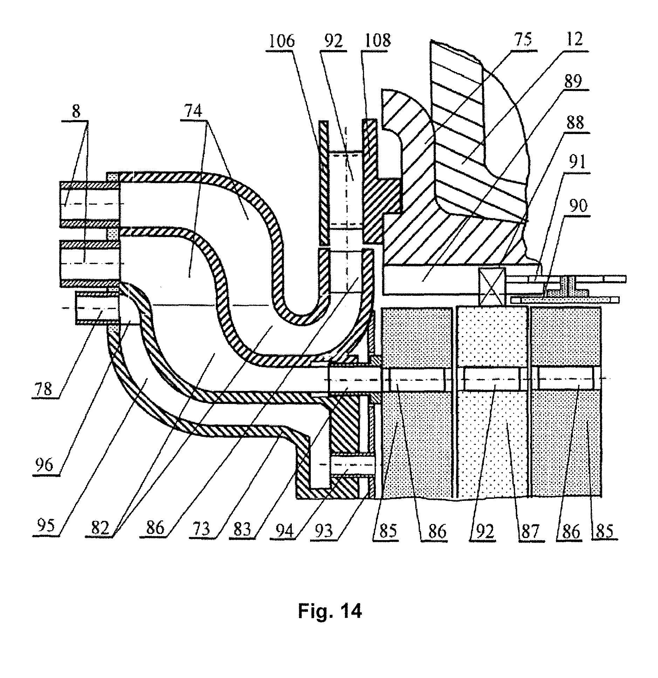

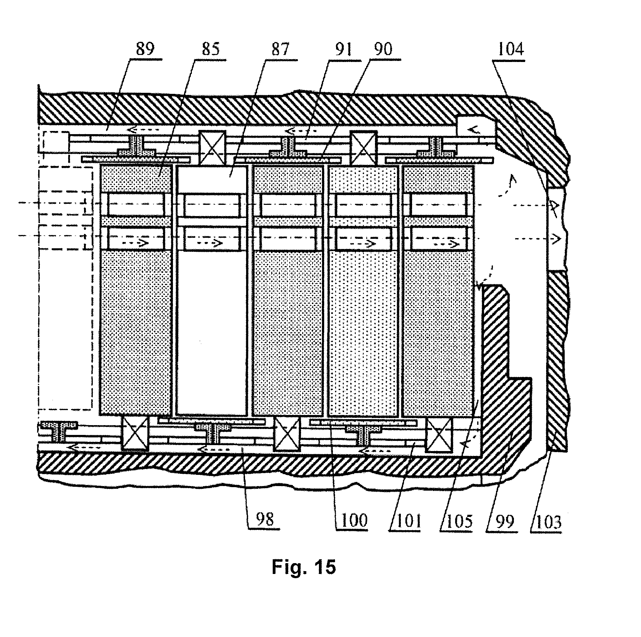

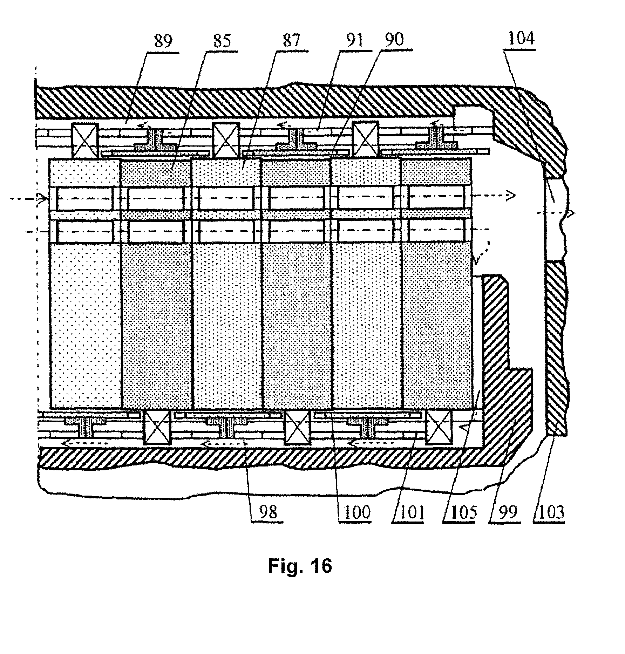

Die Fig. 7 und 8 zeigen eine Gesamtansicht des Fahrwerks mit Luftzuleitung an die axialen Turbinen des Räderantriebs. Dabei zeigt Fig. 8 die Ansicht, die in Fig. 7 mit dem A-Pfeil gekennzeichnet ist. Fig. 9 zeigt dieselbe Ansicht wie Fig. 8, jedoch handelt es sich hier um eine Ausführungsform mit radialen Turbinen des Räder-antriebs. Fig. 10 zeigt die Ausführungsform der Einrichtung mit einer Luftzuleitung an die axialen Turbinen des Rads mit einer Ansicht auf den Stator des Rads. Der Fig. 11 ist eine axiale Flugzeugradturbine in einer Stellung zur Spülung der Scheiben mit Kühlluft zu entnehmen. Die Fig. 12 weist die Ausführungsform der Einrichtung mit radialer Einfachturbine, und zwar die Ansicht auf den Stator des Rads, auf. In Fig. 13 handelt es sich um eine Variante aus Fig. 12 mit radialen Zweistufenturbinen mit zwei Geschwindigkeitsstufen. Fig. 14 weist eine Einrichtung mit einer axialen und einer radialen Turbine des Rads auf. Die Fig. 15 zeigt eine axiale Turbine während des turbinengestützten Räderantriebs bei fehlender Reibungsbremsung. Die Fig. 16 zeigt eine axiale Turbine während der reibungs- und turbinengestützten Bremsung.

Die Fig. 7 zeigt ein Übersichtsbild des Fahrwerks des Flugzeugs mit einer Luftzuleitung an die Turbinen der Räder. Parallel zu einer Federstrebe des Fahrwerks mit einem Stoßdämpfer 63 und einem Hilfskolben 64 des Stoßdämpfers ist eine ausziehbare teleskopierbare Rohrleitung 65 aufgebaut, um die Luft den Rädern 12 des Fahrwerks zuzuführen. Die Rohrleitung 65 ist an eine Druckluftquelle angeschlossen (in Fig. 7 nicht abgebildet). Ein zum Stoßdämpfer 63 fester Teil der teleskopierbaren Rohrleitung 65 ist am Stoßdämpfer 63 mittels eines Bügels 66 befestigt. Ein ausziehbarer Stutzen der teleskopierbaren Rohrleitung 65 ist zu seinem festen Teil luftdicht ausgebildet und wird am Hilfskolben 64 des Stoßdämpfers mittels eines Bügels 67 befestigt. Am Hilfskolben 64 des Stoßdämpfers ist ein Schwinghebel 69 des Fahrgestells mittels eines Bügels 68 befestigt. Am Schwinghebel 69 sind Radachsen 70 sowie Räder 12 montiert. Zwischen dem Befestigungsbügel 68 und dem Schwinghebel 69 sind Dämpfer 71 des Schwinghebels 69 eingebaut.

Der untere Teil des ausziehbaren Stutzens der teleskopierbaren Rohrleitung 65 ist an einen Luftsammler 7 des Fahrwerks mittels eines Stutzens 72 (Fig. 8 und 9) angeschlossen. An einem Stator 73 des Rads 12 sind Luftsammler 74 aufgebaut, die über eine Felge 75 des Rads 12 nicht hinausgehen. Diese Luftsammler 74 sind anhand der Stutzen 8 mit Steuerventilen 9 an den Luftsammler 7 des Fahrwerks angeschlossen. Der Stutzen 76 mit einem Steuerventil 79 schließt den Luftsammler 7 des Fahrwerks an eine Düse des Ejektors 77 an, dessen Eintritt für das ejektierbare Medium mittels des Stutzens 78 an den Luftsammler (in Fig. 7 nicht abgebildet) des Bremsenkühlungssystems angeschlossen ist.

Die Fig. 8 weist die in Fig. 7 mit einem A-Pfeil gekennzeichnete Ansicht für die Ausführungsform mit axialen Turbinen der Flugzeugräder auf.

Die Fig. 9 weist die in Fig. 7 mit einem A-Pfeil gekennzeichnete Ansicht für die Ausführungsform mit radialen Turbinen der Flugzeugräder auf. Hier sind Stutzen 72 und Laufräder 80 und 81 der radialen Turbinen des Rads 12 mit entgegengesetzten Drehrichtungen abgebildet, die an der Felge 75 des Rads 12 montiert sind.

Die Fig. 10 zeigt ein Übersichtsbild für die Luftzuleitung an die axialen Turbinen des Rads. Die Luftzufuhrstutzen 8 münden in jeweilige Luftsammler 74. Die Luftsammler 74 sind mittels Segment-Luftleitungen 82 mit Luftzufuhrsegmenten 83 für Düsenringe der axialen Turbinen verbunden. Die Luftzufuhrsegmente 83 passen dicht in jeweilige Segment-Luftleitungen 82, so dass sie bei ihrer Versenkung in die Luftleitungen 82 gleichläufig mit der Radachse verschiebbar und von da aus herausschiebbar sind. Die Segment-Luftleitungen 82 mit Luftzufuhrsegmenten 83 für die Düsenringe der Turbine sind zwischen Bremstrommeln 84 gleichmäßig am Kreisumfang angeordnet.

Die beweglichen Luftzufuhrsegmente 83 für den Düsenring werden mit Federn (nicht abgebildet) gegen einen Bremsscheibe-Stator 85 der Radbremse gepresst. Der an den Luftzufuhrsegmenten 83 angrenzende Scheiben-Stator 85 sowie die nachfolgenden Scheiben-Statoren 85 der Bremse enthalten Durchgangskanalsektoren, die am Kreisumfang gleichmäßig verteilt sind, so dass der Scheiben-Stator im Meridianschnitt einen Düsenring mit einer Zweietagenschaufel (Doppelschaufel) 86 für die partielle Luftbeaufschlagung des Laufrade darstellt.

Die Füße 88 der Bremsscheiben-Rotoren 87 passen in die Schlitznuten 89 im Trommelteil der Felge 75 des Rads. Zwischen den Scheiben-Rotoren 87 sind Zylinderringe 90 so eingebaut, dass der äußere Zylinderteil der Scheiben-Rotoren 87 einwärts des Zylinderrings 90 mit einem kleinen Spalt eintritt. An der äußeren Zylinderoberfläche der Zylinderringe 90 sind Federsektoren 91 angebaut, die in den Schlitznuten 89 sitzen und sich gegen die Füße 88 der Scheiben-Rotoren 87 stemmen. An den seitlichen Stirnflächen der Zylinderringe 90 gibt es gleichmäßig am Kreisumfang angeordnete Systeme von Ausschnitten (Ansicht A).

In den Scheiben-Rotoren 87 der Radbremse sind am gesamten Kreisumfang angeordnete Schaufelkanäle gegenüber den Düsenschaufeln 86 des Scheiben-Stators 85 ausgebildet und zwar so, dass der Scheiben-Rotor im Meridianschnitt ein Laufrad der Turbine mit einer Zweietagenschaufel 92 darstellt. Dabei stellen die jeweiligen Etagen der Schaufel eine gegenläufige Scheibendrehung sicher. Die Winkelbreite der Schaufelsegmente der Scheiben-Statoren 85 ist so ausgebildet, dass sie in der Luftströmungsrichtung zunimmt und somit für die Vergrößerung des Durchlassquerschnitts im Strömungsraum der axialen Turbine sorgt. Die Scheiben-Rotoren 87 wirken als Laufräder der axialen Turbine und die Scheiben-Statoren 85 als ihre Düsendeckel.

Zwischen dem Stator 73 des Rads und dem ersten Bremsscheiben-Stator 85 ist ein ringförmiger Wärmeschutzschild 93 eingebaut. Anhand der über die Breite des Luftzuleitungssegments gleichmäßig angeordneten und im Stator 73 und im Wärmeschutzschild 93 angebauten Stutzen 94 ist ein Raum zwischen dem Wärmeschutzschild 93 und dem ersten Scheiben-Stator 85 mittels Segment-Luftleitungen mit dem Luftsammler 96 des Bremsenkühlungssystems verbunden. Die Luftsammler 74 und 96, die Segment-Luftleitungen 82 mit den darin eingebauten Luftzufuhrsegmenten 83, die Segment-Luftleitungen 95 und die Bremstrommeln 84 sind in Form eines monolithischen Blocks ausgebildet, welcher auf dem Stator 73 jedes Rads angebaut ist. Der Fig. 11 ist ein Radquerschnitt im Bremslamellenpaket zu entnehmen, welcher die erfindungsgemäße Einrichtung näher erklärt. Die Füße 97 der Bremsscheiben-Statoren 85 passen in die Schlitznuten 98 im Bremskörper 99 hinein. Zwischen den Scheiben-Statoren 85 sind Ringe 100 so eingebaut, dass sie in den zylindrischen Innenteil der Scheiben-Statoren 85 mit einem kleinen Spalt eintreten. An der inneren Zylinderoberfläche der Ringe 100 sind Federsektoren 101 angebaut, die in den Schlitznuten 98 sitzen und sich gegen die Füße 97 der Scheiben-Statoren 85 stemmen.

An den seitlichen Stirnflächen der Ringe 100 gibt es Systeme von gleichmäßig am Kreisumfang angeordneten Ausschnitten 102. Der Scheibenteil 103 der Felge des Rads hat am Kreisumfang gleichmäßig angeordnete Löcher 104 gegenüber den Schaufelsegmenten des letzten Scheiben-Stators 85. Der letzte Scheiben-Stator 85 liegt an der Stützstirnfläche des Bremskörpers 99 an. Die Stützstirnfläche des Bremskörpers 99 hat ein System von radialen stirnseitigen Nuten 105. Die Nuten 105 bilden mit der Oberfläche des Scheiben-Stators 85 ein System von radialen Kühlungskanälen, die einen Raum hinter dem Bremsscheibenpaket mit Schlitznuten 98 verbinden. Gleichzeitig kommuniziert der Raum hinter dem Bremsscheibenpaket (Lamellenpaket) mit dem Raum der Schlitznuten 89, die die Füße 88 der Scheiben-Rotoren 87 aufnehmen.

Die Fig. 12 zeigt ein Übersichtsbild der Luftzuleitung an die radialen Turbinen des Rads. Luftzufuhrstutzen 8 münden in die jeweiligen Luftsammler 74, welche mittels Segment-Luftleitungen 82 mit den Sektoren von Düsengittern 86 der radialen Turbinen verbunden sind.

Die Laufschaufeln 92 der radialen Luftturbinen befinden sich zwischen den Scheiben 106 und 107, 107 und 108 und sind in Form eines einheitlichen Laufrads mit zwei

Strömungen ausgebildet. Das Laufrad ist an der Felge 75 des Rads im Fahrwerk montiert. Dabei stellen die zwischen den Scheiben 106 und 107 angeordneten Schaufeln des Laufrads die gleiche Drehrichtung sicher. Die Schaufeln zwischen den Scheiben 107 und 108 sorgen für die Drehung in die entgegengesetzte Richtung. Zwischen dem Stator 73 und dem ersten Bremsscheiben-Stator 85 ist ein ringförmiger Wärmeschutzschild 93 eingebaut. Die über die Breite des Luftzuleitungssegments gleichmäßig angeordneten und im Stator 73 und im Wärmeschutz-schild 93 eingebauten Stutzen 94 verbinden den Raum zwischen dem Wärme-schutzschild 93 und dem ersten Scheiben-Stator 85 mit dem Luftsammler 96 des Bremsenkühlungssystems mittels Segment-Luftleitungen 95. Die Segment-Luft-leitungen 82 und 95 für die Luftzufuhr sind am Kreisumfang gleichmäßig angeordnet und befinden sich zwischen den Bremstrommeln 84. Die Luftsammler 74 und 96, die Segment-Luftleitungen 82 mit Düsenschaufeln 86 und die Segment-Luftleitungen 95 und Bremstrommeln 84 sind in Form eines monolithischen Blocks ausgebildet, der auf dem Stator 73 jedes Rads aufgebaut ist.

Die Fig. 13 zeigt das Übersichtsbild für die Luftzuleitung an die radialen Turbinen eines Rads mit einigen Geschwindigkeitsstufen. Hier sind die Laufschaufeln 92 der radialen Turbinen mit zwei Geschwindigkeitsstufen auf der Scheibe 108 angebaut, welche an der Felge 75 des Rads montiert ist. Die Scheibe 109 ist nicht drehbar. An der Scheibe 109 sind Leitschaufeln 110 der Geschwindigkeitsstufen angebaut. Zwischen dem ersten Bremsscheiben-Stator 85 und dem Stator 73 ist ein ring-förmiger Wärmeschutzschild 93 eingebaut. Die über die Breite des Luftzuleitungssegments gleichmäßig angeordneten und im Stator 73 und im Wärmeschutz-schild 93 eingebauten Stutzen 94 verbinden den Raum zwischen dem Wärmeschutzschild 93 und dem ersten Scheiben-Stator 85 mit dem Luftsammler 96 des Bremsenkühlungssystems mittels Segment-Luftleitungen 95. Die Segment-Luftleitungen 82 und 95 für die Luftzufuhr sind am Kreisumfang gleichmäßig angeordnet und befinden sich zwischen den Bremstrommeln 84. Die Luftsammler 74 und 96, die Segment-Luftleitungen 82 mit den Düsenschaufeln 86, die Segment-Luftleitungen 95 und die Bremstrommeln 84 sind in Form eines monolithischen Blocks ausgebildet, der auf dem Stator 73 jedes Rads aufgebaut ist. Die nicht drehbare Scheibe 109 mit den Leitschaufeln 110 ist an diesem monolithischen Block montiert.

Die Fig. 14 zeigt ein Übersichtsbild der Luftzuleitung an die radiale Einfachturbine des Rads und an die axiale Turbine des Rads, die entgegengesetzte Drehrichtungen haben. Der obere Luftsammler 74 ist mit seinen Segment-Luftleitungen 82 mit Düsenringen 86 der radialen Einfachturbine verbunden. Der untere Luftsammler 74 ist mit seinen Segment-Luftleitungen 82 mit Luftzufuhrsegmenten 83 an Düsenringe der axialen Turbine angeschlossen. Die Düsenringe 86 sind mit einem Spalt vor dem Laufrad der Radialturbine mit Schaufeln 92 angebaut. Die Schaufeln 92 sind zwischen den Scheiben 106 und 108 eingebaut. Die Scheibe 108 ist an der Felge 75 des Rades des Fahrwerks angebaut. Im Unterschied zu Fig. 12 sind die Düsen- und die Laufschaufeln hier mit keiner Zwischenwand in zwei Strömungen aufgeteilt, und das Laufrad der Radialturbine hat nur eine Drehrichtung.

Die Luftzufuhrsegmente 83 schließen sich an den ersten Scheiben-Stator 85 der Radbremse an. Hier wie auch in allen anderen Scheiben-Statoren sind Sektoren der Schaufelkanäle des Düsenrings der axialen Flugzeugradturbine am Kreisumfang gleichmäßig verteilt ausgebildet. Im Unterschied zu Fig. 10 handelt es sich hier um übliche Düsen- und Laufschaufeln und um keine Zweietagenschaufeln. Die axiale Turbine hat nur eine Drehrichtung, die der Drehrichtung der Radialturbine entgegengesetzt ist.

Während der Bewegung des Flugzeugs arbeitet die vorgeschlagene Einrichtung in folgenden Betriebsarten:

I. Beschleunigung der Flugzeugräder vor der Landung; dabei läuft die Turbine für die Raddrehung in der Bewegungsrichtung an.

II. Turbinengestützte Bremsart gleichzeitig mit einer Reibungsbremsung.

III. Turbinengestützte Bremsart ohne Funktion einer Reibungsbremse, Betriebsart des Räderantriebs während der Vor- oder Rückwärtsfahrt.

IV. Betriebsart der Bremsenkühlung bei fehlendem Räderantrieb und bei fehlender Reibungsbremsung.

Funktionsweise der beschriebenen Einrichtung mit einer axialen Turbine, wobei Scheiben-Rotoren als Laufräder und Scheiben-Statoren als Düsendeckel wirken:

In den Betriebsarten I und III ist Hochdruckluft von einer Bord- (oder einer Boden-) Druckluftversorgung in die teleskopierbare Rohrleitung 65 des Fahrwerks gefördert. Während der Arbeit des Stoßdämpfers 63 des Fahrwerks, wenn der Hilfskolben 64 des Stoßdämpfers sich im Zuge der Flugzeugbewegung verschiebt, fährt auch der ausziehbare Stutzen der teleskopierbaren Rohrleitung 65 mit. Die Luft strömt von der teleskopierbaren Rohrleitung 65 über den Stutzen 72 in den Luftsammler 7 des Fahrwerks. Nach einem Steuersignal öffnet das Ventil 9 der entsprechenden Drehrichtung des Rads und die Luft vom Luftsammler 7 fließt über den Stutzen 8 in den Luftsammler 74. Beim Betrieb der Einrichtung gemäß Fig. 10 und 14 ist ein Steuersignal auch an die Bremstrommeln 84 geschickt. Dadurch drücken die Bremstrommeln 84 das Paket der Bremsscheiben (Lamellen) 85 und 87 zusammen, so dass zwischen den Scheiben-Statoren 85 und den Scheiben-Rotoren 87 minimale Spalte gemäß Fig. 10, 14 und 15 hergestellt werden. Die vorgefederten beweglichen Sektoren 83 für die Luftzufuhr in den Düsenring werden gegen den Bremsscheibe-Stator 85 der Radbremse so gepresst, dass praktisch keine Luftüberströmungen dazwischen zustande kommen können. In diesem Fall tritt der äußere Zylinderteil der Scheiben-Rotoren 87 einwärts der Ringe 90 mit einem kleinen Spalt so ein, dass das System von den am Kreisumfang angeordneten Ausschnitten sich über dem zylindrischen Teil der Scheiben-Rotoren 87 befindet. Die Ringe 100 treten in den zylindrischen Innenteil der Scheiben-Statoren 85 mit einem kleinen Spalt so ein, dass das System von den am Kreisumfang angeordneten Ausschnitten 102 sich innerhalb des zylindrischen Teils der Scheiben-Statoren 85 befindet. Auf diese Weise ist die freie Bewegung der Hochdruckluft zwischen den Bremsscheiben gesperrt.

Aus dem Luftsammler 74 kommt die Luft über Segment-Luftleitungen 82 und durch Sektoren 83 in die Düsensektoren des ersten Bremsscheiben-Stators 85 und dann an die Laufschaufeln des Scheiben-Rotors 87. Danach erfolgt die Luftbewegung wie in einer konventionellen Turbine. Nach dem Austritt aus dem letzten in Luftströmungsrichtung liegenden Scheiben-Rotor 87 passiert die Luft den Austrittsleitapparat im letzten Scheiben-Stator 85 und strömt in den Raum zwischen dem Bremsscheibenpaket und dem Scheibenteil 103 der Felge des Rads ein. Der Druck in diesem Raum ist etwas höher als der Atmosphärendruck. Das stellt die Bewegung der während der Ausdehnung in der Turbine abgekühlten Luft über die Schlitznuten 89 im Trommelteil der Felge 75 des Rads und über die radialen Kanäle 105 und die Schlitznuten 98 im Bremskörper 99 sicher. Dies führt zur Kühlung der Endteile der Bremsscheiben. Die während der Bewegung in den Schlitznuten 98 erwärmte Luft steht in keinem Kontakt mit dem Stator 73 des Rads, denn sie strömt den ringförmigen Wärmeschutzschild 93 an, fließt daran entlang radial zur Felge der Scheibe und strömt ins Freie hinaus.

Für die in Fig. 14 dargestellte Einrichtung wird die Luft bei Reibungsbremsung oder bei Rückwärtsfahrt der axialen Bremsturbine (Rückwärtsfahrtturbine) zugeführt. Bei einer axialen Turbine mit Zweietagenschaufeln wird die Luft der Außenetage der axialen Turbine zugeführt. In diesem Fall wird die Luft bei Vorwärtsfahrt oder bei der Beschleunigung der Räder vor der Landung der Innenetage der Schaufeln der axialen Turbine zugeführt. Bei der Einrichtung nach Fig. 14 wird die Luft in diesem Fall der radialen Turbine zugeführt.

Bei der II. Betriebsart - turbinengestütztes Bremsen zusammen mit Reibungsbremsen - wird ein Steuersignal an das Ventil 9 geschickt. Die Luft strömt aus dem Luftsammler 7 über den Stutzen 8 in den Luftsammler 74 der oberen Etage der Schaufeln. Dabei wird auch ein Steuersignal an die Bremstrommeln 84 geschickt. Demzufolge drücken sie das Paket der Bremsscheiben (Lamellen) 85 und 87 zusammen und erzeugen damit dank der Reibungskräfte ein Bremsmoment gemäß Fig. 16. In diesem Fall tritt der äußere Zylinderteil der Scheiben-Rotoren 87 in die Ringe 90 völlig hinein, und die Ringe 100 treten in den zylindrischen Innenteil der Scheiben-Statoren 85 ein. Dabei werden die Federsektoren 91 und 101 maximal zusammen-gedrückt. Die in die obere Schaufeletage kommende Luft erzeugt ein Drehmoment der Radbremsung. Dieses Drehmoment wird mit dem Reibungsmoment aufsummiert. Die während der Ausdehnung in der Turbine abgekühlte Luft passiert die Schlitz-nuten 89 im Trommelteil der Felge 75 des Rads und die Radialkanäle 105 und die Schlitznuten 98 im Bremskörper 99 und kühlt dadurch die Endteile der Bremsscheiben.

Die Betriebsart IV zur Kühlung der Bremse bei fehlendem Räderantrieb und Reibungsbremsung erfolgt unter Einsatz des Ejektors. Der Ejektor pumpt die Kühlungsluft über die Scheibenbremse durch. Wird ein Steuersignal an das Steuerventil 79 geschickt, so öffnet das Steuerventil 79, und die Druckluft strömt aus dem Luftsammler 7 des Fahrwerks zum Stutzen 76 und darüber an die Ejektordüse 77. Die Stellung der Bremsscheiben ist dabei in Fig. 11 dargestellt und entspricht den maximalen Axialspalten zwischen den Scheiben-Statoren 85 und den Scheiben-Rotoren 87. Der Ejektor 77 erzeugt einen Unterdruck. Dadurch fließt die Luft aus dem Bremsenraum zwischen dem ersten Scheiben-Stator 85 und dem Wärme-schutzschild 93 über ein System von Stutzen 94 und über Segment-Luftleitungen 95 in den Luftsammler 96 des Bremsenkühlungssystems hinein. Aus dem Luftsammler 96 kommt die Luft über den Stutzen 78 zum Eintritt in den Ejektor 77, und von hier aus wird die Luft ins Freie ausgelassen. Im Endeffekt werden die Bremsscheiben mit Freiluft gespült, welche unter Flugbedingungen eine sehr niedrige Temperatur haben kann. Bei stillgesetzten Hauptmotoren können die Bremsen des Flugzeugs auf dem Abstellplatz dank dem Betrieb der Hilfsenergieanlage gekühlt werden.

Beispiel 6 Kenndaten der axialen Flugzeugradturbine

Für die Bremse des IL-96T/M kann Folgendes angenommen werden: Außendurchmesser der Bremsscheiben 464 mm, Innendurchmesser 305 mm (S.S. Kokonin et al.), Schaufelhöhe der oberen Etage 10 mm, Schaufelhöhe der unteren Etage 10 mm, Ringstärke zwischen den Schaufeln 5 mm. Die Leistung der Reibungskräfte zwischen dem Scheiben-Stator und dem Scheiben-Rotor kann wie folgt beschrieben werden:

$$N_f = \int_{r_1}^{r_2} F_f U(r) dr = \int_{r_1}^{r_2} F_f \omega \cdot r dr = F_f \omega \int_{r_1}^{r_2} r dr = F_f \omega \frac{(r_2^2 - r_1^2)}{2}$$

wobei

$F_f$ - Reibungskraft zwischen den Scheiben,
$U(r)$ - Umfangsgeschwindigkeit des Scheiben-Rotors am Halbmesser r und
$r_1$ und $r_1$ - Innen- und Außenhalbmesser der Scheiben sind

Auf die gleiche Weise wird auch der Reibleistungsverlust berechnet. Der Reibleistungsverlust wird durch die fehlende Reibung an dem die Schaufeln der Turbine aufnehmenden Ring verursacht. Die relative Leistungsabnahme der Reibungsbremse kann schätzweise bei 35% liegen, gesetzt den Fall, dass der Entspannungsgrad im Turbinenrad gleich 7 ist. Um die zulässige Temperatur von 120° C hinter der Turbine zu erreichen, muss die Lufttemperatur vor der Radturbine bei einem Wirkungsgrad der Turbine von 0,6 ca. 255° C sein. Wird die Luft für die Turbinen des Fahrwerks nach dem Schaltbild aus Fig. 2 mit Hilfe eines Turboladers aufbereitet, über dessen Eintritt die Luft aus einem Gebläsekreis zugeführt wird, so bedeutet dies, dass die Luft vor der Turbine des Turboladers auf 175° C abgekühlt werden muss. Dabei beträgt das verfügbare Wärmegefälle in der Turbine 137,3 kJ/kg.

Für die genannten Abmessungen und Kenndaten kann die Turbinenleistung im oberen Kreislauf bei gemäßigten axialen Strömungsgeschwindigkeiten hinter der Turbine (300 m/sec) schätzungsweise bei ca. 550 kW liegen. Das macht ca. 37% der Reibungsleistung der Bremse aus, d. h. die Gesamtleistung der Bremse wird tatsächlich nicht geändert. Wird in den Scheiben der Bremse eine 25 mm hohe einfache Schaufel (Einetageschaufel) eingebaut, so kann bereits eine Turbinen-leistung von ca. 1400 kW erreicht werden. Die Gesamtbremsleistung (unter Beachtung der abnehmenden Reibungsleistung) wird ca. 2356 kW betragen. Das ist um 60% höher als die Ausgangsleistung. Der Luftverbrauch der Turbine wird ca. 10,05 kg/sec betragen. Dabei werden 17,0 kg/sec dem Nebenstrom des Motors (dem zweiten Kreis des Motors) für drei Räder des Fahrwerks entnommen. Unter Berücksichtigung der Abzapfung für die Luftkühlung vor der Turbine des Turboladers handelt es sich dann um 30,58 kg/sec. Das macht ca. 1,35% des Luftverbrauchs im Gebläsekreis aus. 13,58 kg/sec werden der Hochdruckabzapfung für die Turbine des Turboladers entnommen. Das vergrößert den Luftverbrauch in dieser Abzapfung um ca. 30 %.

Die Berechnungen weisen darauf hin, dass in einer axialen Mehrstufenturbine eine höhere Leistung erreicht werden kann als in einer radialen Einfachturbine oder in einer radialen Turbine mit Geschwindigkeitsstufen.

**Patentansprüche**

1.  Antriebsart für Flugzeugräder und ein Flugzeugfahrwerk,
    **dadurch gekennzeichnet,**
    **dass** jedes Rad des Fahrwerks mit Hilfe einer mit dem Rad koaxialen Luftturbine in entgegengesetzter Drehrichtung verdrehbar ist,
    **dass** einer der Turbinen Luft zuführbar ist, deren Luftdruck den Atmosphärendruck überschreitet,
    **dass** die Luft Hauptmotoren oder einer Hilfstriebwerksanlage des Flugzeugs entnehmbar ist und
    **dass** vor der Turbine eine solche Temperatur aufrechterhaltbar ist, dass die Lufttemperatur hinter der Turbine die für Radtrommel- und Reifenmaterialfestigkeit zulässigen Temperaturwerte nicht überschreitet.

2.  Antriebsart für Flugzeugräder und ein Flugzeugfahrwerk nach Anspruch 1,
    **dadurch gekennzeichnet,**
    **dass** die Luft an jede Luftturbine jedes Rads des Fahrwerks von einem Ejektor zuleitbar ist, der die Umgebungsluft ansaugt und
    **dass** diese Luft einer Düse eines Ejektors von Hauptmotoren oder von einer Hilfstriebwerksanlage des Flugzeugs unter solchem Druck zuführbar ist, der den Atmosphärendruck überschreitet.

3.  Antriebsart für Flugzeugräder und ein Flugzeugfahrwerk nach Anspruch 1 oder 2,
    **dadurch gekennzeichnet,**
    **dass** die Luft den Luftturbinen der Flugzeugräder oder der Düse des Ejektors von einer der Abzapfungen der Verdichter der Haupt-Gasturbinentriebwerke des Flugzeuges zuführbar ist.

4.  Antriebsart für Flugzeugräder und ein Flugzeugfahrwerk nach Anspruch 1, **dadurch gekennzeichnet,**
    **dass** die Luft den Luftturbinen der Flugzeugräder von hinter einem Gebläse der Haupt-Zweikreistriebwerke des Flugzeugs hervor zuführbar ist.

5.  Antriebsart für Flugzeugräder und ein Flugzeugfahrwerk nach Anspruch 1, **dadurch gekennzeichnet,**
    **dass** die Luft den Luftturbinen der Flugzeugräder aus einer Mischvorrichtung zuführbar ist, welche mit Druckluft von einem Verdichter und einer Turbine eines Turboladers versorgbar ist,
    **dass** die Luft dem Verdichter des Turboladers von hinter Gebläsen der Haupt-Zweikreistriebwerke hervor zuführbar ist und
    **dass** die Luft der Turbine des Turboladers von einer der Hochdruckabzapfungen der Verdichter der Haupt-Zweikreistriebwerke des Flugzeugs zuführbar ist.

6.  Antriebsart für Flugzeugräder und ein Flugzeugfahrwerk nach Anspruch 1, **dadurch gekennzeichnet,**
    **dass** die Luft den Luftturbinen der Flugzeugräder von einer Mischvorrichtung zuführbar ist, die mit Druckluft von einem Verdichter und einer Turbine eines Turboladers versorgbar ist,
    **dass** die Luft einem Verdichter des Turboladers von einer der Niederdruckabzapfungen der Verdichter der Haupt-Gasturbinentriebwerke zuführbar ist und dass die Luft der Turbine des Turboladers von einer der Hochdruckabzapfungen der Verdichter der Haupt-Gasturbinentriebwerke des Flugzeugs zuführbar ist.

7. Antriebsart für Flugzeugräder und ein Flugzeugfahrwerk nach Anspruch 1 oder 2,
   **dadurch gekennzeichnet,**
   **dass** die Luft den Luftturbinen der Flugzeugräder oder der Düse des Ejektors von einer Aufladungsleitung der Kolbentriebwerke des Flugzeugs zuführbar ist.

8. Antriebsart für Flugzeugräder und ein Flugzeugfahrwerk nach Anspruch 1 oder 2,
   **dadurch gekennzeichnet,**
   **dass** die Luft den Luftturbinen der Flugzeugräder oder der Düse des Ejektors von einer Zwischenverdichtungsstufe eines Aufladesystems der Kolbentriebwerke des Flugzeugs zuführbar ist.

9. Antriebsart für Flugzeugräder und ein Flugzeugfahrwerk nach Anspruch 1 oder 2,
   **dadurch gekennzeichnet,**
   **dass** jedes Rad des Fahrwerks beim Landeanflug auf eine Umfangsgeschwindigkeit an einer Felge des Reifens beschleunigbar ist, welche der Flugzeuggeschwindigkeit gleich ist,
   **dass** die Drehgeschwindigkeit des Rads dabei mit Hilfe eines Steuerventils steuerbar ist, welches die Luft der Luftturbine mit entsprechender Drehrichtung nach einem Signal zuführt und
   **dass** das Signal durch einen Bord-Computer des Flugzeugs beim Vergleich der vom Bordcomputer empfangenen Signale eines Eigengeschwindigkeitsgebers des Flugzeugs und eines Rad-Drehzahlgebers erzeugbar ist.

10. Fahrwerk eines Flugzeugs mit einem Radantrieb, mit einer Federstrebe, wobei an einem Hilfskolben eines Stoßdämpfers der Federstrebe ein Schwinghebel des Fahrwerks mittels eines Befestigungsbügels befestigt ist, dabei sind am Schwinghebel Dämpfer und Radachsen montiert, mit Bremstrommeleinheiten und Rädern, in deren Trommeln Bremskörper mit Bremsscheibenpaketen angeordnet sind,
    **dadurch gekennzeichnet,**
    **dass** parallel zur Federstrebe des Fahrwerks eine ausziehbare teleskopierbare Rohrleitung darauf befestigt ist, um Luft den Rädern des Fahrwerks zuzuführen, dass ein fester Teil der Rohrleitung mittels eines Bügels am Stoßdämpfer befestigt ist,
    **dass** ein ausziehbarer Stutzen der Rohrleitung luftdicht zum festen Teil ausgebildet ist und mittels eines Bügels am Hilfskolben des Stoßdämpfers befestigt ist,
    **dass** die teleskopierbare Rohrleitung an einer Seite an eine Druckluftquelle an Bord des Flugzeugs und an der anderen Seite an einen Verteiler-Luftsammler der Flugzeugräder angeschlossen ist,
    **dass** an den Verteiler-Luftsammler luftmäßig nicht kommunizierende Verteilerringsammler der Räder mittels je zwei Auslassstutzen pro Rad angeschlossen sind, wobei jeder der Auslassstutzen mit einem Steuerventil versehen ist,
    **dass** jeder der Verteilerringsammler mittels Segment-Luftleitungen an seine jeweilige Radial- oder Axiallufturbine des Räderantriebs angeschlossen ist, dass die Turbinen dabei entgegengesetzte Drehrichtungen haben,
    **dass** zwischen einem Stator des Rads und einem ersten Bremsscheiben-Stator ein ringförmiger Wärmeschutzschild eingebaut ist,
    **dass** anhand der über die Breite des Luftzuleitungssegments gleichmäßig angeordneten und im Stator und im Wärmeschutzschild angebauten Stutzen ein Raum zwischen dem Wärmeschutzschild und dem ersten Scheiben-Stator mittels Segment-Luftleitungen mit einem Luftsammler eines Bremsenkühlungssystems verbunden ist,
    **dass** Verteilerringsammler der Räder, Luftsammler des Kühlungssystems, Segment-Luftleitungen und Bremstrommeln dabei in Form eines monolithischen Blocks ausgebildet sind, welcher auf dem Stator jedes Rads angebaut ist, und dass im Scheibenteil der Felge des Rads Löcher gegenüber dem letzten Scheiben-Stator am Kreisumfang gleichmäßig angeordnet sind.

11. Fahrwerk eines Flugzeugs mit einem Radantrieb nach Anspruch 10,
    **dadurch gekennzeichnet,**
    **dass** die Segment-Luftleitungen des ringförmigen Verteilersammlers des Rads der axialen Turbine an ihren jeweiligen Satz der am Kreisumfang gleichmäßig angeordneten gefederten Luftzuleitungssegmente angeschlossen sind, dass Luftzuleitungssegmente gegen den ersten Bremsscheiben-Stator ständig angepresst sind,
    **dass** die Luftzuleitungssegmente in jeweilige Segment-Luftleitungen dicht einpassen, so dass ihre Verfahrbarkeit zusammen mit dem Scheiben-Stator parallel zur Radachse möglich ist,
    **dass** gegenüber den Luftzuleitungssegmenten Durchgangskanalsektoren in dem ihnen angrenzenden Scheiben-Stator sowie in nachfolgenden Scheiben-Statoren der Bremse, bis auf den letzten Scheiben-Stator, ausgebildet sind, so dass die Scheiben-Statoren Düsenringe der axialen Turbine mit partieller LuftBeaufschlagung der Laufräder darstellen,

**dass** im letzten Scheiben-Stator Durchgangskanäle ausgebildet sind, so dass der letzte Scheiben-Stator einen Austrittsgleichrichter mit Schaufeln zur partiellen Luftableitung vom letzten Laufrad der axialen Turbine darstellt,

**dass** die Winkelbreite der Schaufelsegmente der Scheiben-Statoren dabei so ausgebildet ist, dass sie von Scheibe zu Scheibe in Luftströmungsrichtung zunimmt,

**dass** in den Scheiben-Rotoren der Radbremse Durchgangskanäle am Kreisumfang gleichmäßig ausgebildet sind und zwar so, dass die Scheiben-Rotoren Laufräder der axialen Turbine mit Schaufeln darstellen, die gegenüber den jeweiligen Düsenschaufeln der Scheiben-Statoren angeordnet sind.

12. Fahrwerk eines Flugzeugs mit einem Radantrieb nach Anspruch 11,
**dadurch gekennzeichnet,**
**dass** im Scheibenteil der Felge des Rads Löcher am Kreisumfang gleichmäßig verteilt sind, die gegenüber den Schaufelkanälen des letzten Scheiben-Stators liegen.

13. Fahrwerk eines Flugzeugs mit einem Radantrieb nach Anspruch 10,
**dadurch gekennzeichnet,**
**dass** die Segment-Luftleitungen des ringförmigen Verteilersammlers des Rads der Radialturbine an ihren jeweiligen Satz von gleichmäßig am Kreisumfang ihres jeweiligen Durchmessers angeordneten Segmenten von radialen Düsenringen angeschlossen sind,

**dass** gegenüber den Düsenringen ein Laufrad einer Einfachturbine oder einer radialen Mehrstufenluftturbine mit einem Radialspalt an einer Innenfelge des Rads aufgebaut ist und

**dass** die Düsenringe der radialen Luftturbine, und im Falle des Einsatzes einer Mehrstufenturbine mit einigen Geschwindigkeitsstufen der radialen Luftturbine auch unbewegliche Räder der Leitschaufeln, dabei an einem monolithischen Block befestigt sind, der auf dem Stator jedes Rads angebaut ist.

14. Fahrwerk eines Flugzeugs mit einem Radantrieb nach Anspruch 10,
**dadurch gekennzeichnet,**
**dass** die am letzten Scheiben-Stator anliegende Stützstirnfläche des Bremskörpers radiale stirnseitige Nuten hat, die mit der Oberfläche des Scheiben-Stators ein System von radialen Kühlungskanälen bilden, die mit Schlitznuten des Bremskörpers kommunizieren.

15. Fahrwerk eines Flugzeugs mit einem Radantrieb nach Anspruch 10,
**dadurch gekennzeichnet,**
**dass** zwischen den Scheiben-Rotoren Zylinderringe montiert sind, so dass der äußere Zylinderteil der Scheiben-Rotoren einwärts der Ringe mit einem kleinen Spalt eintritt,

**dass** an der äußeren Zylinderoberfläche der Ringe Federsektoren angebaut sind, die in Schlitznuten des Trommelteils der Felge des Rads sitzen und sich gegen die Füße der Scheiben-Rotoren stemmen und

**dass** dabei an seitlichen Stirnflächen der Ringe Systeme von gleichmäßig am Kreisumfang angeordneten identischen Ausschnitten vorhanden sind.

16. Fahrwerk eines Flugzeugs mit einem Radantrieb nach Anspruch 10,
**dadurch gekennzeichnet,**
**dass** zwischen den Scheiben-Statoren Zylinderringe so angeordnet sind, dass sie in einen zylindrischen Innenteil der Scheiben-Statoren mit einem kleinen Spalt hineinpassen,

**dass** an der inneren Zylinderoberfläche der Ringe Federsektoren angebaut sind, die in Schlitznuten des Bremskörpers sitzen und sich gegen die Füße der Scheiben-Statoren stemmen, und

**dass** an seitlichen Stirnflächen der Ringe Systeme von gleichmäßig am Kreisumfang angeordneten identischen Ausschnitten vorgesehen sind.

Fig. 1

Fig. 2

**Fig. 3**

EP 2 899 120 A1

Fig. 4

18

**Fig. 5**

**Fig. 6**

**Fig. 7**

## Ansicht A aus Fig. 7

12

78

7

8

69    64    72    65    71    9    79    9    70    74

75

73

### Fig. 8

## Ansicht A aus Fig. 7 (Ausführungsform)

12

78

7

75

81

80

6    64    72    65    8    7    9    79    9    7    74    73

### Fig. 9

Ansicht A
gedreht

Fig. 10

EP 2 899 120 A1

Ansicht B

Ansicht C

**Fig. 11**

**Fig. 12**

Fig. 13

Fig. 14

**Fig. 15**

Fig. 16

## INTERNATIONAL SEARCH REPORT

| International application No. |
|---|
| PCT/RU 2012/000778 |

**A.   CLASSIFICATION OF SUBJECT MATTER**

B64C 25/40 (2006.01 )  B64C 25/42 (2006.01)

According to International Patent Classification (IPC) or to both national classification and IPC

**B.   FIELDS SEARCHED**

Minimum documentation searched (classification system followed by classification symbols)

B64C 25/00-25/50

Documentation searched other than minimum documentation to the extent that such documents are included in the fields searched

Electronic data base consulted during the international search (name of data base and, where practicable, search terms used)

PatSearch (RUPTO internal), Esp@cenet, PAJ, USPTO

**C.   DOCUMENTS CONSIDERED TO BE RELEVANT**

| Category* | Citation of document, with indication, where appropriate, of the relevant passages | Relevant to claim No. |
|---|---|---|
| A | DE 4235815 A11 (DEURSCHE AEROSPACE AIRBUS GMBH) 28.04.1994, abstract, the claims, fig. 1-12 | 1-16 |
| A | RU 2222473 S1 (OTKRYTOE AKTSIONERNOE OBSHCHESTVO AVIATSIONNAIA KORPORATSIIA "RUBIN") 27.01.2004, abstract, p. 4, lines 1-3, p. 4, line 33- p. 5, line 29, fig., cited in the application | 1-16 |
| A | WO 2009/141550 A2 (AIRBUS FRANCE et al.) 26.11.2009, fig. 1-5 | 1-16 |
| A | G. I. ZHITOMIRSKII. Konstruktsiia samoletov. Moscow, "Mashinostroenie", 2005, 3-ie edition, ISBN 5-217-03299-5, p. 270-272, fig. 7.22 | 1-16 |
| A | US 5165624 A (GUY S. LEWIS, JR.) 24.11.1992, abstract, col. 1, lines 8-15, col. 1, line 55- col. 2, line 13, col. 2, line 49- col. 3, line 16, col. 3, line 39-col. 4, line 41, fig. 1-4 | 1-16 |

| ☒ Further documents are listed in the continuation of Box C. | ☐ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 06 May 2013 (06.05.2013) | 27 June 2013 (27.06.2013) |

| Name and mailing address of the ISA/ RU | Authorized officer |
|---|---|
| Facsimile No. | Telephone No. |

Form PCT/ISA/210 (second sheet) (April 2005)

**INTERNATIONAL SEARCH REPORT**

| | International application No. |
|---|---|
| | PCT/RU 2012/000778 |

C (Continuation).     DOCUMENTS CONSIDERED TO BE RELEVANT

| Category* | Citation of document, with indication, where appropriate, of the relevant passages | Relevant to claim No. |
|---|---|---|
| A | RU 2126503 C1 (KLOD ANKUR et al.) 20.02.1999, abstract, fig. 1-4, 9, 10, cited in the application | 1-16 |

Form PCT/ISA/210 (continuation of second sheet) (April 2005)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- RU 2152334
- RU 2384467
- RU 2403180
- GB 2436042 A, Durch Rod F. Soderberg

- RU 2222473, V.N. Parfyonov, V.A. Maximov, D.P. Yamkovenko, V.P. Klinkov, V.A. Nikolaev
- RU 2126503, Claude Ankur, Yvonne Ankur

**In der Beschreibung aufgeführte Nicht-Patentliteratur**

- **T.N. ABRAMOVICH.** *Angewandte Gasdynamik. M.: Nauka,* 1969, 824

- Enzyklopädie. M. 1999, 300